# EUROPEAN PATENT APPLICATION

(11) **EP 3 355 585 A1**
(43) Date of publication of application: **01.08.2018**
(21) Application number: 16868903.2
(22) Date of filing: 24.11.2016
(51) Int. Cl.: H04N 19/513, H04N 19/107, H04N 19/105, H04N 19/139, H04N 19/44, H04N 19/159, H04N 19/119

(54) **IMAGE ENCODING METHOD AND DEVICE, AND IMAGE DECODING METHOD AND DEVICE**

(30) Priority: 24.11.2015 US 201562259153 P
(71) Applicant: Samsung Electronics Co., Ltd., Suwon-si, Gyeonggi-do 16677 (KR)
(72) Inventor: LEE, Jin-young, Suwon-si Gyeonggi-do 16582 (KR); CHOI, Ki-ho, Seoul 04586 (KR); LEE, Sun-il, Seoul 06751 (KR); PIAO, Yin-ji, Yongin-si Gyeonggi-do 16956 (KR)
(74) Representative: Appleyard Lees IP LLP
(86) International application number: PCT/KR2016/013624
(87) International publication number: WO 2017/091007

(57) **Abstract**

Provided is a method of decoding motion information, in which information for determining motion-related information includes spatial information and temporal prediction candidate, the spatial information indicates a direction of a spatial prediction candidate used in sub-units, from among spatial prediction candidates at a left side and upper sides of a current prediction unit, and the temporal information indicates a reference prediction unit of a previous picture, which is used for predicting the current prediction unit. Also, provided is an encoding or decoding apparatus executing an encoding or decoding method.

## Description

### TECHNICAL FIELD

The present disclosure relates to a method and apparatus for encoding or decoding an image by using various data units included in the image, and more particularly, to partitioning of a prediction unit into sub-units and allocating prediction information related to a motion of a prediction unit adjacent to a current unit to each of the sub-units.

### BACKGROUND ART

Image data is encoded according to a predetermined data compression standard, for example, a codec according to the Moving Picture Expert Group (MPEG) standard, and then is recorded in a recording medium or transferred via a communication channel in the form of bitstream.

As hardware for reproducing and storing high resolution or high quality image content is being developed and supplied, a need for a codec for effectively encoding or decoding the high resolution or high quality image content is increasing. Image content that is encoded may be decoded to be reproduced. Recently, methods of effectively compressing the high resolution or high quality image content have been performed. For example, a method of effectively compressing image by processing the image to be encoded in an arbitrary manner is used.

In order to compress an image, various data units may be used, and hierarchical relationship may exist among the data units. A data unit may be partitioned by using various methods in order to determine a size of the data unit used in the image compression, and when an optimized data unit according to image characteristics is determined, image encoding or decoding may be performed.

### DESCRIPTION OF EMBODIMENTS

### TECHNICAL PROBLEM

According to an inter prediction method of the related art, one motion vector is allocated to one block and prediction is performed, and thus, when there are a plurality of motions in the block, smaller blocks are compressed and more bits are necessary. Also, since one motion vector is used even in a case where different objects exist in the same block, prediction accuracy may degrade.

### SOLUTION TO PROBLEM

According to an aspect of the present disclosure, a method of decoding motion information, the method includes: determining a current prediction unit; obtaining a spatial prediction candidate spatially related to the current prediction unit and a temporal prediction candidate temporally related to the current prediction unit; partitioning the current prediction unit into one or more sub-units; obtaining, from a bitstream, information for determining motion-related information of a current sub-unit, the information being from among motion-related information of the spatial prediction candidate and motion-related information of the temporal prediction candidate; and obtaining motion-related information of the current sub-unit by using the information for determining the motion-related information, wherein the information for determining the motion-related information comprises spatial information and temporal information, the spatial information indicates a direction of a spatial prediction candidate used in the one or more sub-units, from among spatial prediction candidates adjacent to the current prediction unit, and the temporal information indicates a reference prediction unit of a previous picture used for estimating the current prediction unit.

According to an aspect of the present disclosure, an apparatus for decoding motion information, the apparatus includes: a prediction unit determiner configured to determine a current prediction unit; and a decoder configured to obtain a spatial prediction candidate spatially related to the current prediction unit and a temporal prediction candidate temporally related to the current prediction unit, to partition the current prediction unit into one or more sub-units, to obtain, from a bitstream, information for determining motion-related information of a current sub-unit, the information being from among motion-related information of the spatial prediction candidate and motion-related information of the temporal prediction candidate, and to obtain the motion-related information of the current sub-unit by using the information for determining the motion-related information, wherein the information for determining the motion-related information comprises spatial information and temporal information, the spatial information indicates a direction of a spatial prediction candidate used in the one or more sub-units, from among spatial prediction candidates adjacent to the current prediction unit, and the temporal information indicates a reference prediction unit of a previous picture used for estimating the current prediction unit.

According to an aspect of the present disclosure, a method of encoding motion information, the method includes: obtaining motion information about a current prediction unit by performing motion prediction on the current prediction unit; generating a spatial prediction candidate spatially related to the current prediction unit and a temporal prediction candidate temporally related to the current prediction unit; partitioning the current prediction unit into one or more sub-units; generating information for determining motion-related information of a current sub-unit, the information being from among motion-related information of the spatial prediction candidate and motion-related information of the temporal prediction candidate; and encoding motion-related information for predicting the current sub-unit by using generated information, wherein the information for determining the motion-related information comprises spatial information and temporal information, wherein the spatial information indicates a direction of a spatial prediction candidate used in the one or more sub-units, from among spatial prediction candidates adjacent to the current prediction unit, and the temporal information indicates a reference prediction unit of a previous picture used for estimating the current prediction unit.

According to an aspect of the present disclosure, an apparatus for encoding motion information, the apparatus includes: a motion information obtainer configured to obtain motion information about a current prediction unit by performing motion prediction on the current prediction unit; a bitstream generator configured to generate a spatial prediction candidate spatially related to the current prediction unit and a temporal prediction candidate temporally related to the current prediction unit, to partition the current prediction unit into one or more sub-units, and to generate information for determining motion-related information of a current sub-unit, the information being from among motion-related information of the spatial prediction candidate and motion-related information of the temporal prediction candidate; and an encoder configured to encode motion-related information for predicting the current sub-unit by using generated information, wherein the information for determining the motion-related information comprises spatial information and temporal information, wherein the spatial information indicates a direction of a spatial prediction candidate used in the one or more sub-units, from among spatial prediction candidates adjacent to the current prediction unit, and the temporal information indicates a reference prediction unit of a previous picture used for estimating the current prediction unit.

### ADVANTAGEOUS EFFECTS OF DISCLOSURE

According to one or more embodiments of the present disclosure, a plurality of motion vectors or transformed motion vectors are allocated to one block by using peripheral motion vectors, and thus, image encoding and decoding operations may be effectively performed, and quality of a reconstructed image may be improved.

### BRIEF DESCRIPTION OF DRAWINGS

FIG. 1 is a block diagram of an apparatus for decoding motion information, the apparatus obtaining motion-related information of sub-units that are partitioned, according to an embodiment.
FIG. 2 is a block diagram of an apparatus for encoding motion information, the apparatus generating motion-related information of sub-units that are partitioned, according to an embodiment.
FIG. 3 is a diagram illustrating a prediction unit partitioned into one or more sub-units, according to an embodiment.
FIG. 4 is a diagram illustrating allocation of motion-related information of a spatial prediction candidate to each of the sub-units, according to an embodiment.
FIG. 5 illustrates determining availability of a spatial prediction candidate that is spatially related to a prediction unit, according to an embodiment.
FIG. 6 illustrates obtaining motion-related information of a reference prediction unit in a previous picture by using temporal information, according to an embodiment.
FIG. 7 is a diagram illustrating obtaining motion-related information of one or more spatial prediction candidates adjacent to a sub-unit, according to an embodiment.
FIG. 8 is a flowchart illustrating a method of decoding motion information in order to obtain motion-related information of sub-units by using information for determining the motion-related information, according to an embodiment.
FIG. 9 is a flowchart illustrating a method of encoding motion information in order to generate motion-related information of sub-units by using information for determining the motion-related information, according to an embodiment.
FIG. 10 shows that partitioning methods for determining non-square second coding units by partitioning a first coding unit are restricted when the second coding units satisfy a predetermined condition, according to an embodiment.
FIG. 11 illustrates an operation of partitioning a square coding unit when partition shape information indicates not to partition the square coding unit into four square coding units, according to an embodiment.
FIG. 12 shows that a processing order of a plurality of coding units is variable depending on an operation of partitioning a coding unit, according to an embodiment.
FIG. 13 illustrates an operation of determining a depth of a coding unit as the shape and size of the coding unit varies when a plurality of coding units are determined by recursively partitioning the coding unit, according to an embodiment.
FIG. 14 shows depths of and part indices (PIDs) for identifying coding units, which are determinable based on the shapes and sizes of the coding units, according to an embodiment.
FIG. 15 shows that a plurality of coding units are determined based on a plurality of predetermined data units included in a picture, according to an embodiment.
FIG. 16 illustrates a processing block serving as a unit for determining a determination order of reference coding units included in a picture, according to an embodiment.
FIG. 17 is a diagram illustrating coding units that may be determined for each picture, in a case where a combination of partition types of a coding unit varies according to each picture, according to an embodiment.
FIG. 18 is a diagram showing various types of coding units that may be determined based on partition shape information expressed in a binary code, according to an embodiment.
FIG. 19 is a diagram showing another type of coding unit that may be determined based on partition shape information that may be expressed in a binary code, according to an embodiment.
FIG. 20 is a block diagram of an image encoding and decoding system performing a loop filtering.
FIG. 21 is a diagram showing examples of filtering units included in a largest coding unit and filtering execution information of the filtering units, according to an embodiment.
FIG. 22 is a diagram illustrating a process of performing merging or partitioning between coding units determined according to a predetermined encoding method, according to an embodiment.
FIG. 23 is a diagram showing an index according to a Z-scan order of coding units according to an embodiment.
FIG. 24 is a diagram showing a reference sample for intra predicting a coding unit, according to an embodiment.

### BEST MODE

According to an aspect of the present disclosure, a method of decoding motion information, the method includes: determining a current prediction unit; obtaining a spatial prediction candidate spatially related to the current prediction unit and a temporal prediction candidate temporally related to the current prediction unit; partitioning the current prediction unit into one or more sub-units; obtaining, from a bitstream, information for determining motion-related information of a current sub-unit, the information being from among motion-related information of the spatial prediction candidate and motion-related information of the temporal prediction candidate; and obtaining motion-related information of the current sub-unit by using the information for determining the motion-related information, wherein the information for determining the motion-related information comprises spatial information and temporal information, the spatial information indicates a direction of a spatial prediction candidate used in the one or more sub-units, from among spatial prediction candidates adjacent to the current prediction unit, and the temporal information indicates a reference prediction unit of a previous picture used for estimating the current prediction unit.

The obtaining of the spatial prediction candidate and the temporal prediction candidate may include: determining the reference prediction unit of the previous picture by using the temporal information; partitioning the reference prediction unit into one or more reference sub-units; determining a reference sub-unit, from among the one or more reference sub-units, used in prediction of the current sub-unit that is one of the one or more sub-units; and obtaining motion-related information of the reference sub-unit for predicting the current sub-unit, wherein the motion-related information for predicting the current sub-unit may include motion-related information of the reference sub-unit.

The method may further include determining availability of motion-related information about at least one of the spatial prediction candidates, wherein the determining of the availability may include: searching upper spatial prediction candidates located above the current prediction unit in a predetermined scan order, and selecting an initial upper spatial prediction candidate having available motion-related information and upper spatial prediction candidates located at a right side of the initial upper spatial prediction candidate as available upper spatial prediction candidates of the current prediction unit; and searching left spatial prediction candidates located at a left side of the current prediction unit in a predetermined scan order, and selecting an initial left spatial prediction candidate having available motion-related information and left spatial prediction candidates located under the initial left spatial prediction candidate as available left spatial prediction candidates of the current prediction unit.

The method may further include: when the information for determining the motion-related information indicates to use a spatial prediction candidate located above the current prediction unit, determining whether there is an available spatial prediction candidate above the sub-unit; and when there is no available spatial prediction candidate above the sub-unit, obtaining motion-related information of a left spatial prediction candidate of the current prediction unit as motion-related information of the sub-unit.

The method may further include: when the information for determining the motion-related information indicates to use a spatial prediction candidate located at a left side of the current prediction unit, determining whether there is an available spatial prediction candidate at a left side of the sub-unit; and when there is no available spatial prediction candidate at the left side of the sub-unit, obtaining motion-related information of an upper spatial prediction candidate of the current prediction unit as motion-related information of the sub-unit.

The method may further include, when the information for determining the motion-related information indicates to use at least one of spatial prediction candidates adjacent to the current sub-unit, applying a predetermined weight to motion-related information of one or more of the spatial prediction candidates adjacent to the current sub-unit and obtaining an average value, wherein the obtaining of the motion-related information of the current sub-unit corresponds to the obtaining of the average value.

The method may further include obtaining sub-block size information indicating a size of a sub-block within a size range of the current prediction unit, and the partitioning of the current prediction unit into the sub-units is performed by using the sub-block size information.

The method may further include performing motion compensation on the current sub-unit by using obtained motion-related information.

According to an aspect of the present disclosure, an apparatus for decoding motion information, the apparatus includes: a prediction unit determiner configured to determine a current prediction unit; and a decoder configured to obtain a spatial prediction candidate spatially related to the current prediction unit and a temporal prediction candidate temporally related to the current prediction unit, to partition the current prediction unit into one or more sub-units, to obtain, from a bitstream, information for determining motion-related information of a current sub-unit, the information being from among motion-related information of the spatial prediction candidate and motion-related information of the temporal prediction candidate, and to obtain the motion-related information of the current sub-unit by using the information for determining the motion-related information, wherein the information for determining the motion-related information includes spatial information and temporal information, the spatial information indicates a direction of a spatial prediction candidate used in the one or more sub-units, from among spatial prediction candidates adjacent to the current prediction unit, and the temporal information indicates a reference prediction unit of a previous picture used for estimating the current prediction unit.

The decoder may be configured to determine a reference prediction unit of the previous picture by using the temporal information, to partition the reference prediction unit into one or more reference sub-units, to determine a reference sub-unit, included in the one or more reference sub-units, used in prediction of a current sub-unit that is one of the one or more sub-units, and to obtain motion-related information of the reference sub-unit for predicting the current sub-unit, and wherein the motion-related information for predicting the current sub-unit may include motion-related information of the reference sub-unit.

The decoder may be configured to determine availability of motion-related information about at least one of the spatial prediction candidate and the temporal prediction candidate, and the determining of the availability may include: searching upper spatial prediction candidates located above the current prediction unit in a predetermined scan order, and selecting an initial upper spatial prediction candidate having available motion-related information and upper spatial prediction candidates located at a right side of the initial upper spatial prediction candidate as available upper spatial prediction candidates of the current prediction unit, and searching left spatial prediction candidates located at a left side of the current prediction unit in a predetermined scan order, and selecting an initial left spatial prediction candidate having available motion-related information and left spatial prediction candidates located under the initial left spatial prediction candidate as available left spatial prediction candidates of the current prediction unit.

When the information for determining the motion-related information indicates to use a spatial prediction candidate located above the current prediction unit, the decoder may be configured to determine whether there is an available spatial prediction candidate above the current sub-unit, and when there is no available spatial prediction candidate above the current sub-unit, the decoder may be configured to obtain motion-related information of a left spatial prediction candidate of the current prediction unit as motion-related information of the current sub-unit.

When the information for determining the motion-related information indicates to use a spatial prediction candidate located at a left side of the current prediction unit, the decoder may be configured to determine whether there is an available spatial prediction candidate at a left side of the current sub-unit, and when there is no available spatial prediction candidate at the left side of the sub-unit, the decoder may be configured to obtain motion-related information of an upper spatial prediction candidate of the current prediction unit as motion-related information of the current sub-unit.

According to an aspect of the present disclosure, a method of encoding motion information, the method includes: obtaining motion information about a current prediction unit by performing motion prediction on the current prediction unit; generating a spatial prediction candidate spatially related to the current prediction unit and a temporal prediction candidate temporally related to the current prediction unit; partitioning the current prediction unit into one or more sub-units; generating information for determining motion-related information of a current sub-unit, the information being from among motion-related information of the spatial prediction candidate and motion-related information of the temporal prediction candidate; and encoding motion-related information for predicting the current sub-unit by using generated information, wherein the information for determining the motion-related information comprises spatial information and temporal information, wherein the spatial information indicates a direction of a spatial prediction candidate used in the one or more sub-units, from among spatial prediction candidates adjacent to the current prediction unit, and the temporal information indicates a reference prediction unit of a previous picture used for estimating the current prediction unit.

According to an aspect of the present disclosure, an apparatus for encoding motion information, the apparatus includes: a motion information obtainer configured to obtain motion information about a current prediction unit by performing motion prediction on the current prediction unit; a bitstream generator configured to generate a spatial prediction candidate spatially related to the current prediction unit and a temporal prediction candidate temporally related to the current prediction unit, to partition the current prediction unit into one or more sub-units, and to generate information for determining motion-related information of a current sub-unit, the information being from among motion-related information of the spatial prediction candidate and motion-related information of the temporal prediction candidate; and an encoder configured to encode motion-related information for predicting the current sub-unit by using generated information, wherein the information for determining the motion-related information comprises spatial information and temporal information, wherein the spatial information indicates a direction of a spatial prediction candidate used in the one or more sub-units, from among spatial prediction candidates adjacent to the current prediction unit, and the temporal information indicates a reference prediction unit of a previous picture used for estimating the current prediction unit.

### MODE OF DISCLOSURE

The attached drawings for illustrating one or more embodiments are referred to in order to gain a sufficient understanding, the merits thereof, and the objectives accomplished by the implementation. However, the present disclosure is not limited to the exemplary embodiments set forth below, and may be embodied in various other forms. The embodiments are for rendering the description of the present disclosure complete and are set forth to provide a complete understanding of the scope of the disclosure to one of ordinary skill in the art to which the present disclosure pertains.

The terminology used herein will be described briefly, and the present disclosure will be described in detail.

All terms including descriptive or technical terms which are used herein should be construed as having meanings that are obvious to one of ordinary skill in the art. However, the terms may have different meanings according to an intention of one of ordinary skill in the art, precedent cases, or the appearance of new technologies. Also, some terms may be arbitrarily selected by the applicant. In this case, the meaning of the selected terms will be described in the detailed description. Thus, the terms used herein have to be defined based on the meaning of the terms together with the description throughout the specification.

Singular expressions, unless contextually otherwise defined, include plural expressions.

It will be further understood that the terms "comprises" and/or "comprising," when used in this specification, specify the presence of stated components, but do not preclude the presence or addition of one or more components. The term "unit", as used herein, means a software or hardware component, such as a Field Programmable Gate Array (FPGA) or Application Specific Integrated Circuit (ASIC), which performs certain tasks. However, the term "unit" is not limited to software or hardware. A "unit" may advantageously be configured to reside on the addressable storage medium and configured to execute on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and "units" may be combined into fewer components and "units" or may be further separated into additional components and "units".

Hereinafter, "image" may be a static image such as a still image of a video or a dynamic image such as a moving image, i.e., the video itself.

Hereinafter, "sample" refers to data that is assigned to a sampling location of an image and is to be processed. For example, pixel values of the image in a spatial domain, and transform coefficients in a transform domain may be samples. A unit including at least one of these samples may be defined as a block.

Hereinafter, one or more embodiments of the present disclosure will be described in detail with reference to accompanying drawings to the extent that one of ordinary skill in the art would be able to carry out the present disclosure. In addition, components irrelevant with the description are omitted in the drawings for clear description.

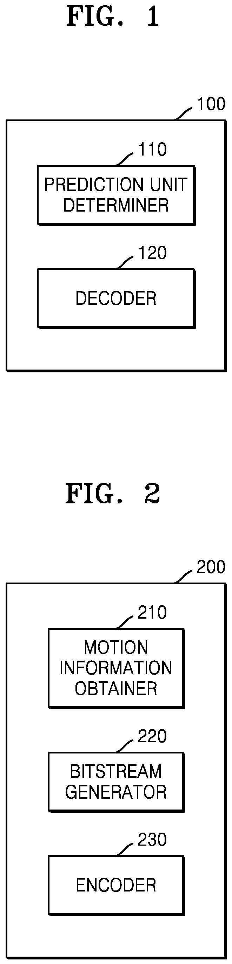

FIG. 1 is a block diagram of an apparatus 100 for decoding motion information, the apparatus obtaining motion-related information of sub-units that are partitioned, according to an embodiment.

Referring to FIG. 1, the motion information decoding apparatus 100 may include a prediction unit determiner 110 determining a current prediction unit in a current picture, and a decoder 120 that obtains a spatial prediction candidate spatially related to the current prediction unit and a temporal prediction candidate temporally related to the current prediction unit, partitions the current prediction unit as one or more sub-units, obtains information for determining motion-related information of the sub-units between motion-related information of the spatial prediction candidate and motion-related information of the temporal prediction candidate from a bitstream, and obtains motion-related information of the sub-units by using the information for determining the motion-related information.

According to an embodiment, the prediction unit may be a data unit for prediction encoding. Also, the prediction unit determiner 110 may determine whether to merge every prediction unit with a neighboring data unit or the spatial prediction candidate. Also, the spatial prediction candidate is a peripheral data unit adjacent to the current prediction unit and may be a data unit that may be merged with the current prediction unit, and a spatial prediction candidate group may be at least one data unit group including a data group that may be merged with the current prediction unit.

According to an embodiment, the motion-related information may include at least one of a reference direction, a reference picture index, a motion vector MV, a motion vector prediction value MVP, and a motion vector differential value MVD. For example, when an inter prediction is in a merge mode, the motion-related information may include at least one of the reference direction, the reference picture index, the motion vector prediction value, and the motion vector. For example, when the inter prediction is in an AMVP mode, the motion-related information may include at least one of the reference direction, the reference picture index, the motion vector MV, and the motion vector differential value.

According to an embodiment, information for determining the motion-related information obtained by the decoder 120 may include spatial information and temporal information. According to an embodiment, the spatial information may indicate a direction of a spatial prediction candidate used in the sub-units, from among spatial prediction candidates adjacent to the current prediction unit. For example, the spatial information may indicate the direction of the spatial prediction candidate used in the sub-units, from among the spatial prediction candidates located at a left side, an upper side, or corners of the current prediction unit. According to an embodiment, temporal information may denote a reference prediction unit of a previous picture, which is used to predict the current prediction unit.

For example, when the spatial information indicates a direction to one of the spatial prediction candidates located at the left side of the current prediction unit, the sub-units of the current prediction unit may be predicted by using motion-related information of the left spatial prediction candidate indicated by the spatial information. For example, when the spatial information indicates a direction to one of the spatial prediction candidates located above the current prediction unit, the sub-units of the current prediction unit may be predicted by using motion-related information of the upper spatial prediction candidate indicated by the spatial information.

According to an embodiment, the decoder 120 may determine a candidate unit to be merged with the current prediction unit by using a motion vector prediction method in an inter mode. For example, from among the spatial prediction candidates contacting all boundaries of the current prediction unit, a plurality of spatial prediction candidates may be determined. According to an embodiment, the decoder 120 may determine a spatial prediction candidate that is to be used in the sub-units, from among the determined plurality of spatial prediction candidates, by using the spatial information.

According to an embodiment, the decoder 120 may search all of neighboring spatial prediction candidates contacting a left boundary of the current prediction unit and all of neighboring spatial prediction candidates contacting an upper boundary of the current prediction unit, for one spatial prediction candidate and determine to be merged with the current prediction unit, by using the spatial information.

Also, according to an embodiment, the decoder 120 may search a spatial prediction candidate group including an upper left spatial prediction candidate, an upper right spatial prediction candidate, and a lower right spatial prediction candidate contacting a corner of the current prediction unit, in addition to the left and upper spatial prediction candidates of the current prediction unit, for one spatial prediction candidate and determine to be merged with the current prediction unit, by using the spatial information.

According to an embodiment, the decoder 120 may determine one spatial prediction candidate from among the left spatial prediction candidate group, the upper spatial prediction candidate group, and the corner spatial prediction candidate group in an implicit way. For example, according to the implicit way, the decoder 120 may search a first spatial prediction candidate group, a second spatial prediction candidate group, or a third spatial prediction candidate group for a spatial prediction candidate having a reference index that is the same as that of the sub-unit of the current prediction unit, and may determine the spatial prediction candidate as one spatial prediction candidate to be merged.

Also, for example, the decoder 120 may search the first spatial prediction candidate group, the second spatial prediction candidate group, or the third spatial prediction candidate group, for a neighboring prediction unit having a prediction mode of an inter mode, and determine the found prediction unit as one spatial prediction candidate to be merged with sub-units of the current prediction unit.

According to an embodiment, the decoder 120 may determine one of the first spatial prediction candidate group as a left spatial prediction candidate, one of the second spatial prediction candidate group as an upper spatial prediction candidate, and one of the third spatial prediction candidate group as a corner spatial prediction candidate, and may determine the left, upper, and corner spatial prediction candidates as one spatial prediction candidate to be merged with the current prediction unit.

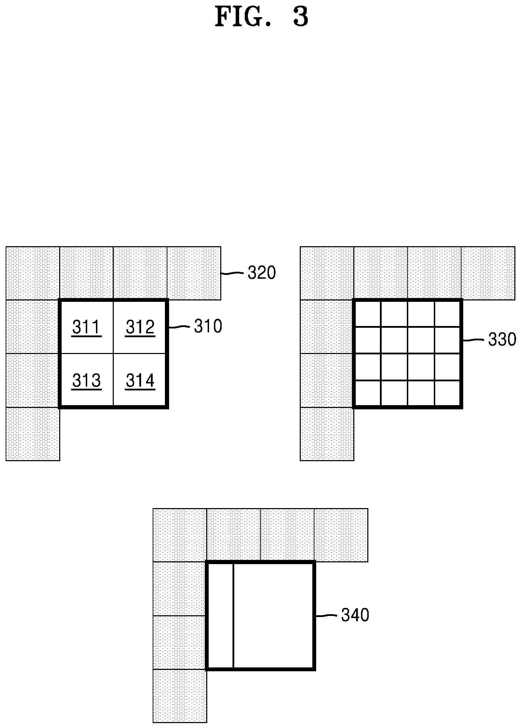

FIG. 3 is a diagram illustrating a prediction unit partitioned into one or more sub-units, according to an embodiment.

Referring to FIG. 3, the prediction unit determiner 110 of the motion information decoding apparatus may determine a current prediction unit 310 of a current picture, and the decoder 120 may partition the current prediction unit into sub-units 311, 312, 313, and 314. Also, the decoder 120 may obtain sub-block size information indicating a size of a sub-block within a size range of the current prediction unit 310, and may partition the current prediction unit into the sub-units by using the sub-block size information.

For example, the sub-unit is a data unit having a size of 32x32, 64x64, 128x128, 256x256, etc. within the size range of the current prediction unit, e.g., a data unit 330 of a square shape having a width and a length of squared value of 2. Also, the sub-unit may be a data unit 340 of an asymmetric shape within the size range of the current prediction unit. The data unit 340 of the asymmetric shape will be described later.

According to an embodiment, the decoder 120 may determine a spatial prediction candidate adjacent to the current prediction unit 310. For example, the decoder 120 may determine a data unit contacting the current prediction unit as a spatial prediction candidate to be merged with the current prediction unit, by using a motion vector prediction method of inter mode. Otherwise, from among spatial prediction candidates contacting to all the boundaries of the current prediction unit, one or more spatial prediction candidates may be determined.

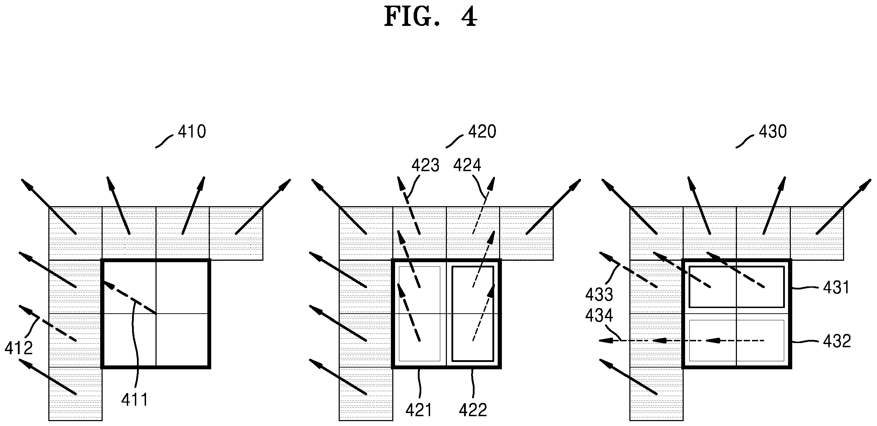

FIG. 4 is a diagram illustrating allocation of motion-related information of a spatial prediction candidate to each of the sub-units, according to an embodiment.

According to an embodiment, the decoder 120 may obtain the spatial prediction candidate to be merged with the current prediction unit including the sub-units, by using the spatial information in the information for determining the motion-related information of the sub-units. For example, when the information for determining the motion-related information indicates the direction towards the spatial prediction candidate located at a lower left side of the current prediction unit, the decoder 120 may use motion-related information of a spatial prediction candidate 412 at the lower left side as the motion-related information of the current prediction unit 411. For example, when the motion-related information of the spatial prediction candidate is used in the current prediction unit, the sub-units included in the current prediction unit may use the motion-related information of the same spatial prediction candidate.

According to an embodiment, when the spatial information in the information for determining the motion-related information indicates the direction of the spatial prediction candidate located on an upper portion of the current prediction unit, the decoder 120 may use the motion-related information of the spatial prediction candidate located on the upper portion of the current prediction unit in the sub-unit located under the spatial prediction candidate on the upper portion. For example, when the spatial information indicates to use the spatial prediction candidate located on the upper portion of the current prediction unit, the decoder 120 may use motion-related information 423 and 424 of the spatial prediction candidates located on upper portions of sub-units 421 and 422 included in a column in a vertical direction from among the sub-units of the current prediction unit.

For example, when the spatial information indicates to use the spatial prediction candidate located on the upper portion of the current prediction unit, sub-units 421 in a first column in the current prediction unit may use motion-related information of the spatial prediction candidate located above the sub-units 421 of the first column, and sub-units 422 in a second column may use motion-related information 424 of the spatial prediction candidate located above the sub-units 422 of the second column.

According to an embodiment, when the spatial information in the information for determining the motion-related information indicates the direction of the spatial prediction candidate located at a left side of the current prediction unit, the decoder 120 may use the motion-related information of the spatial prediction candidate located at the left side of the current prediction unit in the sub-unit located at the right of the spatial prediction candidate on the left side. For example, when the spatial information indicates to use the spatial prediction candidate located at the left side of the current prediction unit, sub-units 431 and 432 included in a row in a horizontal direction from among the sub-units of the current prediction unit may use motion-related information 433 and 434 of the spatial prediction candidates located at the left side. For example, when the spatial information indicates to use the spatial prediction candidate located at the left side of the current prediction unit, sub-units 431 in a first row in the current prediction unit may use motion-related information 433 of the spatial prediction candidate located above the sub-units 431 of the first column, and sub-units 432 in a second row may use motion-related information 434 of the spatial prediction candidate located at the left side of the sub-units 432 of the second row.

For example, the spatial information may indicate a direction in order to use the spatial prediction candidate located at a left or right side of the spatial prediction candidate on the upper portion of the current prediction unit. Also, for example, the spatial information may indicate a direction in order to use the spatial prediction candidate located on an upper or lower portion of the spatial prediction candidate at the left side of the current prediction unit. Also, for example, the spatial information may indicate a corner direction in order to use the spatial prediction candidate adjacent to the corner of the current prediction unit. Also, for example, the spatial information may indicate a direction set in advance to use at least one of spatial prediction candidates adjacent to the current prediction unit.

According to an embodiment, the direction indicated by the spatial information may be indicated as an index set in advance. For example, a predetermined index may be allocated to each of an upper direction, a left direction, an upper left direction, an upper right direction, and a lower left direction, and the spatial information may have an index value corresponding to a corresponding direction.

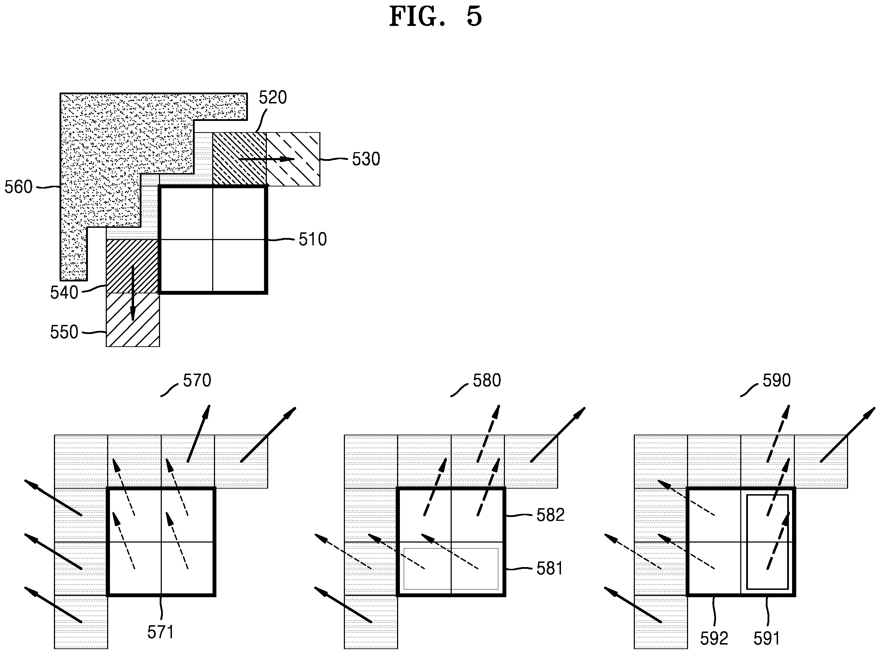

FIG. 5 illustrates determining availability of a spatial prediction candidate that is spatially related to a prediction unit, according to an embodiment.

According to an embodiment, the decoder 120 may determine availability of motion-related information about at least one of the spatial prediction candidates, based on a predetermined circumstance 560 of a data unit adjacent to the current prediction unit. For example, the decoder 120 searches for upper spatial prediction candidates located on the upper portion of the current prediction unit in a predetermined scan order, and may determine an initial upper spatial prediction candidate 520 having available motion-related information. For example, the decoder 120 may determine a spatial prediction candidate 530 having additionally available motion-related information, by scanning in a right direction of the initial upper spatial prediction candidate after determining the initial upper spatial prediction candidate 520 that is available. For example, the decoder 120 may determine the initial upper spatial prediction candidate 520 that is available, and may select upper spatial prediction candidates 530 located at the right side of the initial upper spatial prediction candidate 520 as available upper spatial prediction candidates.

According to an embodiment, the decoder 120 may determine an initial left spatial prediction candidate 540 having available motion-related information, by searching for the left spatial prediction candidate located at the left side of the current prediction unit in a predetermined scan order. For example, the decoder 120 may determine a spatial prediction candidate 550 having additionally available motion-related information, by scanning in a direction towards a lower portion of the initial left spatial prediction candidate after determining the initial left spatial prediction candidate 540 that is available. For example, the decoder 120 may determine the initial left spatial prediction candidate 540 that is available, and may select left spatial prediction candidates 550 located at the lower portion of the initial left spatial prediction candidate 540 as available left spatial prediction candidates.

According to an embodiment, the decoder 120 may obtain spatial information based on the upper spatial prediction candidate and the left spatial prediction candidate that are selected as available spatial prediction candidates. According to an embodiment, the information for determining the motion-related information may indicate to use at least one of the available spatial prediction candidates. For example, the decoder 120 may apply a predetermined weight to motion-related information of the available spatial prediction candidates and obtain an average value. For example, the decoder 120 may use the average value of the motion-related information of the available spatial prediction candidates in the sub-units of the current prediction unit.

According to an embodiment, the decoder 120 may obtain the motion-related information of the available spatial prediction candidates adjacent to the left side of the current prediction unit. For example, when the spatial information indicates to use the spatial prediction candidate located at the left side of the current prediction unit, the decoder 120 may scan in a predetermined direction in order to check whether there is a spatial prediction candidate at the left side of the sub-units. When there is an available spatial prediction candidate at the left side of the sub-units, sub-units 581 in a predetermined row may use the motion-related information of the available spatial prediction candidate at the left side. However, when there is no available spatial prediction unit at the left side of the sub-units in the predetermined row, the decoder 120 may search for an available spatial prediction candidate on an upper portion of the sub-units in the predetermined row, and motion-related information of an initial upper spatial prediction candidate that is available may be used in sub-units 582 of a predetermined row.

According to an embodiment, the decoder 120 may obtain the motion-related information of the available spatial prediction candidates adjacent to the upper portion of the current prediction unit. For example, when the spatial information indicates to use the spatial prediction candidate located above the current prediction unit, the decoder 120 may scan in a predetermined direction in order to check whether there is a spatial prediction candidate at the left side of the sub-units. When there is an available spatial prediction candidate above the sub-units, sub-units 591 in a predetermined column may use the motion-related information of the available spatial prediction candidate on the upper portion. However, for example, when there is no available spatial prediction candidate above the sub-units in the predetermined column, the decoder 120 may search for an available spatial prediction candidate at a left side of the sub-units in the column, and motion-related information of an initial left spatial prediction candidate that is available may be used in sub-units 592 of the predetermined column.

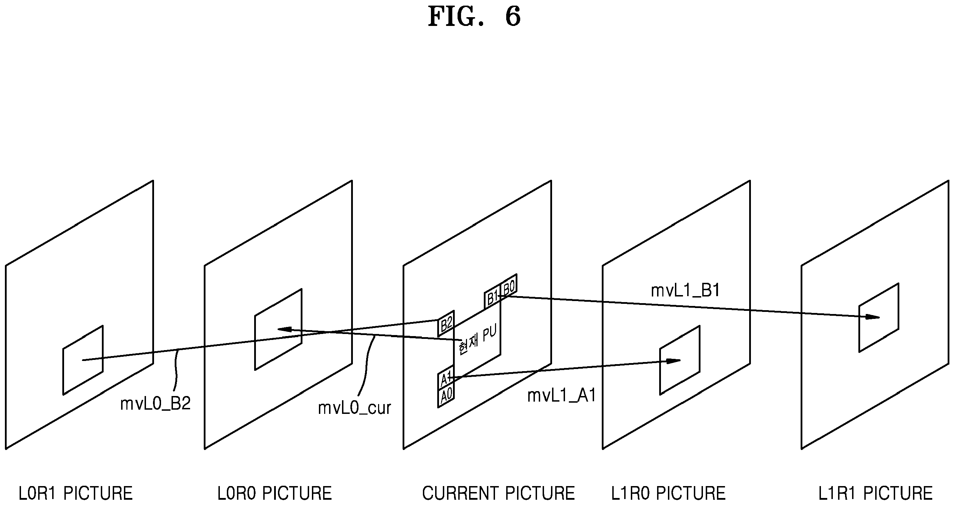

FIG. 6 illustrates obtaining motion-related information of a reference prediction unit in a previous picture by using temporal information, according to an embodiment.

According to an embodiment, the decoder 120 may obtain temporal information indicating a reference prediction unit of a previous picture, which is used to predict a current prediction unit. The temporal information may indicate the reference prediction unit of the previous picture, which is used to predict the current prediction unit. For example, the decoder 120 may determine the reference prediction unit of the previous picture by using the temporal information. The decoder 120 may partition the reference prediction unit as one or more reference sub-units, and from among the reference sub-units obtained by partitioning, a reference sub-unit corresponding to the current sub-unit used to predict the current sub-unit may be determined. The decoder 120 may obtain motion-related information of the determined reference sub-unit, and may merge the motion-related information of the reference sub-unit with the current sub-unit.

According to an embodiment, the decoder 120 may obtain temporal information indicating one or more reference prediction units of one or more previous pictures, which are used to predict the current prediction unit. For example, the decoder 120 may determine one or more reference prediction units of the one or more previous pictures by using the temporal information. The decoder 120 may partition one or more reference prediction units as one or more reference sub-units, and from among the reference sub-units obtained by the partitioning, the decoder 120 may determine one or more reference sub-units corresponding to the current sub-units, which are used to predict the current sub-units. For example, the decoder 120 may obtain motion-related information of one or more reference sub-units, may obtains an average value of one or more pieces of the motion-related information by applying a weight thereto, and may merge the average value of the motion-related information that is obtained by applying the weight with the current sub-units.

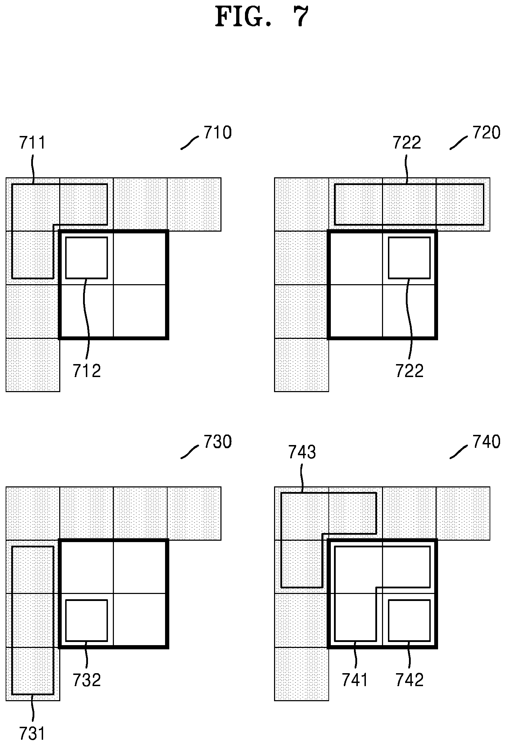

FIG. 7 is a diagram illustrating obtaining motion-related information of one or more spatial prediction candidates adjacent to a sub-unit, according to an embodiment.

According to an embodiment, when the spatial information indicates to use at least one of spatial prediction candidates adjacent to a sub-unit, the decoder 120 may apply a weight to motion-related information of one or more spatial prediction candidates adjacent to the sub-unit to obtain an average value of the one or more spatial prediction candidates. The decoder 120 may merge the average value of the one or more spatial prediction candidates with the sub-unit.

According to an embodiment, when the spatial information indicates to use at least one of spatial prediction candidates adjacent to a sub-unit, the decoder 120 may determine a spatial prediction candidate or a corner spatial prediction candidate group 711 adjacent to a sub-unit 712 at a corner of the prediction unit, and may obtain motion-related information of the determined corner spatial prediction candidate group 711. The decoder 120 may apply a predetermined weight to the motion-related information of the corner spatial prediction candidate group 711, and may merge the motion-related information, to which the predetermined weight is applied, with the sub-unit 712. For example, when the sub-unit 712 is adjacent to a corner of the current prediction unit, the corner spatial prediction candidate group 711 adjacent to the sub-unit 712 may include a corner spatial prediction candidate adjacent to the corner of the prediction unit, and spatial prediction candidates adjacent to a right side and a lower end of the corner spatial prediction candidate. For example, the corner spatial prediction candidate group 711 may include at least one of spatial prediction candidates located at a left side of the prediction unit, and spatial prediction candidates located above the prediction unit. For example, the number of left spatial prediction candidates included in the corner spatial prediction candidate group 711 may be different from the number of upper spatial prediction candidates included in the corner spatial prediction candidate group 711.

According to an embodiment, when the spatial information indicates to use at least one of spatial prediction candidates adjacent to a sub-unit, the decoder 120 may determine a spatial prediction candidate or an upper spatial prediction candidate group 721 adjacent to a sub-unit 722 above the prediction unit, and may obtain motion-related information of the determined upper spatial prediction candidate group 721. The decoder 120 may apply a predetermined weight to the motion-related information of the upper spatial prediction candidate group 721, and may merge the motion-related information, to which the predetermined weight is applied, with the sub-unit 722. For example, when the sub-unit 722 is adjacent to the upper portion of the current prediction unit, the upper spatial prediction candidate 721 adjacent to the sub-unit 722 may include at least one of the upper spatial prediction candidate adjacent to the upper portion of the prediction unit, and spatial prediction candidates adjacent to a right side and a left side of the upper spatial prediction candidate. For example, the number of left spatial prediction candidates included in the upper spatial prediction candidate group 721 may be different from the number of right spatial prediction candidates included in the upper spatial prediction candidate group 721.

According to an embodiment, when the spatial information indicates to use at least one of spatial prediction candidates adjacent to a sub-unit, the decoder 120 may determine a spatial prediction candidate or a left spatial prediction candidate group 731 adjacent to a sub-unit 732 at a left side of the prediction unit, and may obtain motion-related information of the determined left spatial prediction candidate group 731. The decoder 120 may apply a predetermined weight to the motion-related information of the left spatial prediction candidate group 731, and may merge the motion-related information, to which the predetermined weight is applied, with the sub-unit 732. For example, when the sub-unit 732 is adjacent to the left side of the current prediction unit, the left spatial prediction candidate group 731 adjacent to the sub-unit 732 may include at least one of the left spatial prediction candidate adjacent to the left side of the prediction unit, and spatial prediction candidates adjacent to an upper portion and a lower portion of the left spatial prediction candidate. For example, the number of upper spatial prediction candidates included in the left spatial prediction candidate group 731 may be different from the number of lower spatial prediction candidates included in the left spatial prediction candidate group 731.

According to an embodiment, when the spatial information indicates to use at least one of spatial prediction candidates adjacent to the sub-unit, the decoder 120 may determine a peripheral sub-unit group 741 of a sub-unit 742 that is not adjacent to peripheral spatial prediction candidates of the current prediction unit or a corner spatial prediction candidate group 743 that is closest to the sub-unit, and may obtain motion-related information of the determined peripheral sub-unit group 741 or the corner spatial prediction candidate group 743. The decoder 120 may apply a predetermined weight to motion-related information of at least one of the peripheral sub-unit group 741 or the corner spatial prediction candidate group 743, and may merge the motion-related information, to which the predetermined weight is applied, with the sub-unit 742.

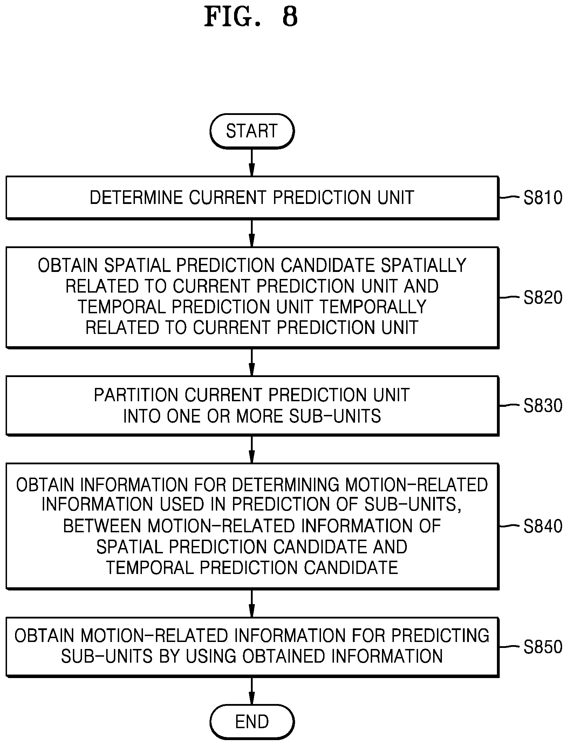

FIG. 8 is a flowchart illustrating a method of decoding motion information in order to obtain motion-related information of sub-units by using information for determining the motion-related information, according to an embodiment.

In operation S810, the motion information decoding apparatus 100 may determine a current prediction unit in a current picture.

In operation S820, the motion information decoding apparatus 100 may obtain a spatial prediction candidate that is spatially related to the current prediction unit and a temporal prediction candidate that is temporally related to the current prediction unit.

In operation S830, the motion information decoding apparatus 100 may partition the current prediction unit as one or more sub-units.

In operation S840, the motion information decoding apparatus 100 may obtain, from a bitstream, information for determining motion-related information of the sub-units, between motion-related information of the spatial prediction candidate and the motion-related information of the temporal prediction candidate.

In operation S850, the motion information decoding apparatus 100 may obtain the motion-related information for predicting the sub-units by using obtained information.

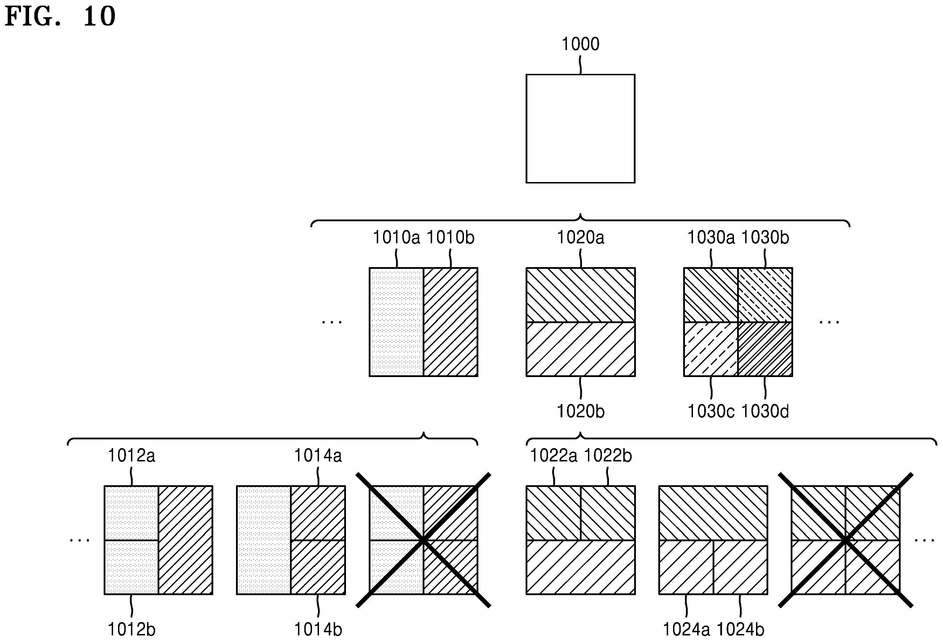

FIG. 10 shows that partitioning methods of the non-square second coding units obtained by partitioning a first coding unit 1000 are restricted by the motion information decoding apparatus 100 when the second coding units satisfy a predetermined condition, according to an embodiment.

According to an embodiment, the decoder 120 may determine to partition the square first coding unit 1000 into non-square second coding units 1010a and 1010b, or 1020a and 1020b based on at least one of block shape information and partition shape information, which is obtained through a bitstream obtainer. The second coding units 1010a and 1010b, or 1020a and 1020b may be independently partitioned. As such, the decoder 120 may determine to or not to partition the first coding unit into a plurality of coding units based on at least one of the block shape information and the partition shape information of each of the second coding units 1010a and 1010b, or 1020a and 1020b. According to an embodiment, the decoder 120 may determine third coding units 1012a and 1012b by partitioning the non-square left second coding unit 1010a, which is determined by partitioning the first coding unit 1000 in a vertical direction, in a horizontal direction. However, when the left second coding unit 1010a is partitioned in a horizontal direction, the decoder 120 may restrict the right second coding unit 1010b not to be partitioned in a horizontal direction in which the left second coding unit 1010a is partitioned. If third coding units 1014a and 1014b are determined by also partitioning the right second coding unit 1010b in a horizontal direction, since the left and right second coding units 1010a and 1010b are independently partitioned in a horizontal direction, the third coding units 1012a and 1012b, and 1014a and 1014b may be determined. However, this case serves equally as a case in which the decoder 120 partitions the first coding unit 1000 into four square second coding units 1030a to 1030d based on at least one of the block shape information and the partition shape information, and may be inefficient in terms of image decoding.

According to an embodiment, the decoder 120 may determine third coding units 1022a and 1022b, or 1024a and 1024b by partitioning the non-square second coding unit 1020a or 1020b, which is determined by partitioning the first coding unit 900 1000 in a horizontal direction, in a vertical direction. However, when a second coding unit (e.g., the upper second coding unit 1020a) is partitioned in a vertical direction, due to the above-described reason, the decoder 120 may restrict the other second coding unit (e.g., the lower second coding unit 1020b) not to be partitioned in a vertical direction in which the upper second coding unit 1020a is partitioned.

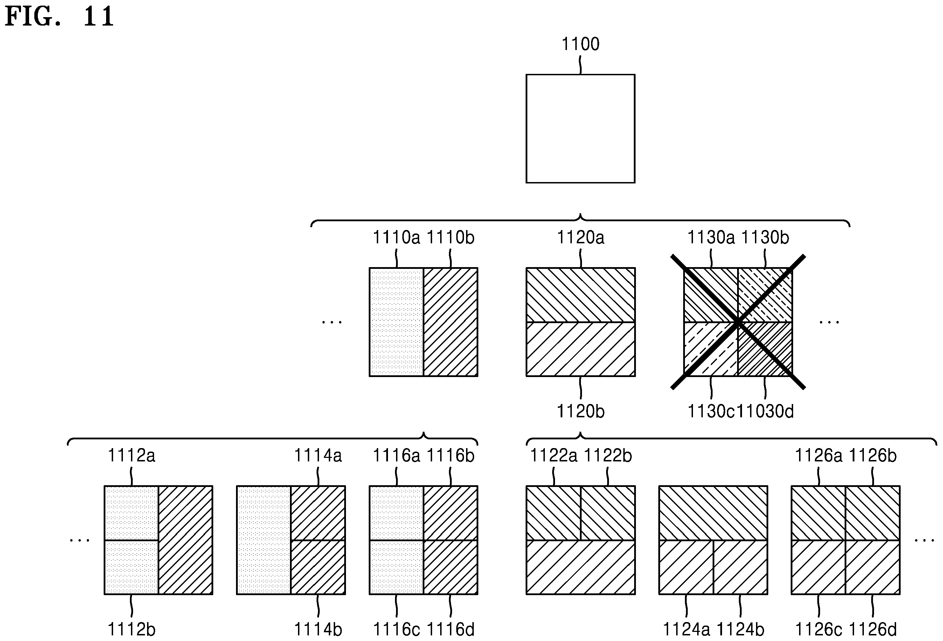

FIG. 11 illustrates an operation, performed by the motion information decoding apparatus 100, of partitioning a square coding unit when partition shape information indicates not to partition the square coding unit into four square coding units, according to an embodiment.

According to an embodiment, the decoder 120 may determine second coding units 1110a and 1110b, or 1120a and 1120b by partitioning a first coding unit 1100 based on at least one of block shape information and partition shape information. The partition shape information may include information about various methods of partitioning a coding unit but, in some times, the information about various partitioning methods may not include information for partitioning a coding unit into four square coding units. According to this partition shape information, the decoder 120 may not partition the first square coding unit 1100 into four square second coding units 1130a, 1130b, 1130c, and 1130d. The decoder 120 may determine the non-square second coding units 1110a and 1110b, or 1120a and 1120b based on the partition shape information.

According to an embodiment, the decoder 120 may independently partition the non-square second coding units 1110a and 1110b, or 1120a and 1120b. Each of the second coding units 1110a and 1110b, or 1120a and 1120b may be recursively partitioned in a predetermined order, and this may correspond to a partitioning method of the first coding unit 1100 based on at least one of the block shape information and the partition shape information.

For example, the decoder 120 may determine square third coding units 1112a and 1112b by partitioning the left second coding unit 1110a in a horizontal direction, and determine square third coding units 1114a and 1114b by partitioning the right second coding unit 1110b in a horizontal direction. Furthermore, the decoder 120may determine square third coding units 1116a to 1116d by partitioning both of the left and right second coding units 1110a and 1110b in a horizontal direction. In this case, coding units having the same shape as the four square second coding units 1130a to 1130d partitioned from the first coding unit 1100 may be determined.

As another example, the decoder 120 may determine square third coding units 1122a and 1122b by partitioning the upper second coding unit 1120a in a vertical direction, and determine square third coding units 1124a and 1124b by partitioning the lower second coding unit 1120b in a vertical direction. Furthermore, the decoder 120 may determine square third coding units 1122a, 1122b, 1124a, and 1124b by partitioning both of the upper and lower second coding units 1120a and 1120b in a vertical direction. In this case, coding units having the same shape as the four square second coding units 1130a to 1130d partitioned from the first coding unit 1100 may be determined.

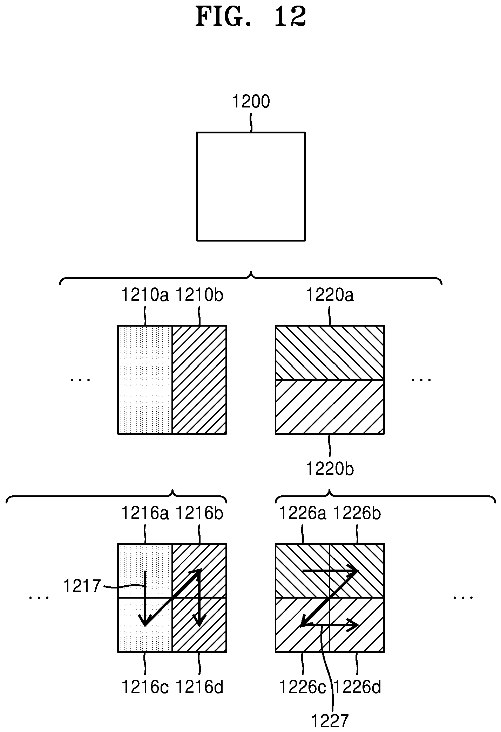

FIG. 12 shows that a processing order of a plurality of coding units is variable depending on an operation of partitioning a coding unit, according to an embodiment.

According to an embodiment, the decoder 120 may partition a first coding unit 1200 based on block shape information and partition shape information. When the block shape information indicates a square shape and the partition shape information indicates to partition the first coding unit 1200 in at least one of horizontal and vertical directions, the decoder 120 may determine second coding units 1210a and 1210b, or 1220a and 1220b by partitioning the first coding unit 1200. Referring to FIG. 12, the non-square second coding units 1210a and 1210b, or 1220a and 1220b determined by partitioning the first coding unit 1200 in only a horizontal or vertical direction may be independently partitioned based on the block shape information and the partition shape information of each coding unit. For example, the decoder 120 may determine third coding units 1216a to 1216d by partitioning the second coding units 1210a and 1210b, which are generated by partitioning the first coding unit 1200 in a vertical direction, in a horizontal direction, and determine third coding units 1226a to 1226d by partitioning the second coding units 1220a and 1220b, which are generated by partitioning the first coding unit 1200 in a horizontal direction, in a vertical direction. An operation of partitioning the second coding units 1210a and 1210b, or 1220a and 1220b has been described above in relation to FIG. 10, and thus a detailed description thereof will not be provided herein.

According to an embodiment, the decoder 120 may process coding units in a predetermined order. An operation of processing coding units in a predetermined order has been described above in relation to FIG. 7, and thus a detailed description thereof will not be provided herein. Referring to FIG. 12, the decoder 120 may determine the four square third coding units 1216a to 1216d, or 1226a to 1226d by partitioning the square first coding unit 1200. According to an embodiment, the decoder 120 may determine a processing order of the third coding units 1216a to 1216d, or 1226a to 1226d based on a partitioning method of the first coding unit 1200.

According to an embodiment, the decoder 120 may determine the third coding units 1216a to 1216d by partitioning the second coding units 1210a and 1210b generated by partitioning the first coding unit 1200 in a vertical direction, in a horizontal direction, and process the third coding units 1216a to 1216d in a processing order 1217 for initially processing the third coding units 1216a and 1216c, which are included in the left second coding unit 1210a, in a vertical direction and then processing the third coding unit 1216b and 1216d, which are included in the right second coding unit 1210b, in a vertical direction.

According to an embodiment, the decoder 120 may determine the third coding units 1226a to 1226d by partitioning the second coding units 1220a and 1220b generated by partitioning the first coding unit 1200 in a horizontal direction, in a vertical direction, and process the third coding units 1226a to 1226d in a processing order 1227 for initially processing the third coding units 1226a and 1226b, which are included in the upper second coding unit 1220a, in a horizontal direction and then processing the third coding unit 1226c and 1226d, which are included in the lower second coding unit 1220b, in a horizontal direction.

Referring to FIG. 12, the square third coding units 1216a to 1216d, or 1226a to 1226d may be determined by partitioning the second coding units 1210a and 1210b, or 1220a and 1220b. Although the second coding units 1210a and 1210b are determined by partitioning the first coding unit 1200 in a vertical direction differently from the second coding units 1220a and 1220b which are determined by partitioning the first coding unit 1200 in a horizontal direction, the third coding units 1216a to 1216d, and 1226a to 1226d partitioned therefrom eventually show same-shaped coding units partitioned from the first coding unit 1200. As such, by recursively partitioning a coding unit in different manners based on at least one of the block shape information and the partition shape information, the decoder 120 may process a plurality of coding units in different orders even when the coding units are eventually determined to the same shape.

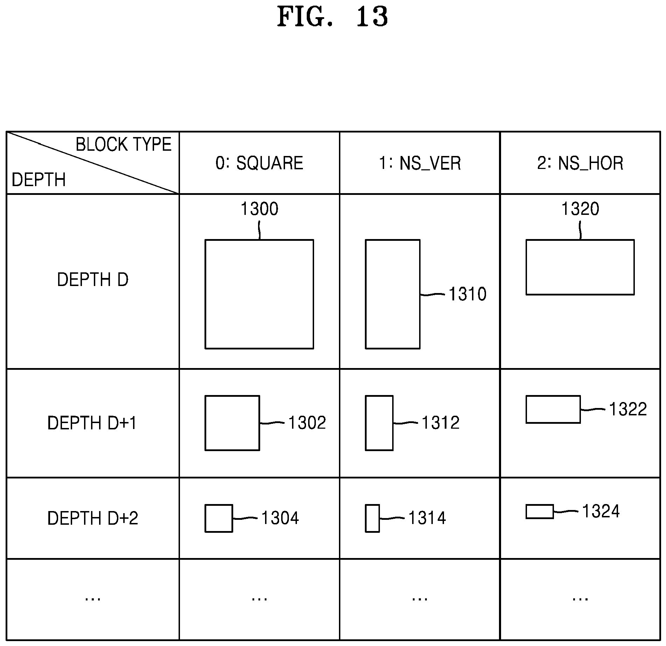

FIG. 13 illustrates an operation of determining a depth of a coding unit as the shape and size of the coding unit varies when a plurality of coding units are determined by recursively partitioning the coding unit, according to an embodiment.

According to an embodiment, the decoder 120 may determine the depth of the coding unit based on a predetermined criterion. For example, the predetermined criterion may be the length of a long side of the coding unit. When the length of a long side of a coding unit before being partitioned is 2ⁿ times (n>0) the length of a long side of a partitioned current coding unit, the decoder 120 may determine that a depth of the current coding unit is increased from a depth of the coding unit before being partitioned, by n. In the following description, a coding unit having an increased depth is expressed as a coding unit of a deeper depth.

Referring to FIG. 13, according to an embodiment, the decoder 120 may determine a second coding unit 1302 and a third coding unit 1304 of deeper depths by partitioning a square first coding unit 1300 based on block shape information indicating a square shape (for example, the block shape information may be expressed as '0: SQUARE'). Assuming that the size of the square first coding unit 1300 is 2Nx2N, the second coding unit 1302 determined by reducing a width and height of the first coding unit 2000 to 1/2¹ may have a size of NxN. Furthermore, the third coding unit 1304 determined by reducing a width and height of the second coding unit 1302 to 1/2 may have a size of N/2×N/2. In this case, a width and height of the third coding unit 1304 are 1/2² times those of the first coding unit 1300. When a depth of the first coding unit 1300 is D, a depth of the second coding unit 1302, the width and height of which are 1/2¹ times those of the first coding unit 1300, may be D+1, and a depth of the third coding unit 1304, the width and height of which are 1/2² times those of the first coding unit 1300, may be D+2.

According to an embodiment, the decoder 120 may determine a second coding unit 1312 or 1322, and a third coding unit 1314 or 1324 of deeper depths by partitioning a non-square first coding unit 1310 or 1320 based on block shape information indicating a non-square shape (for example, the block shape information may be expressed as '1: NS_VER' indicating a non-square shape, a height of which is longer than a width, or as '2: NS_HOR' indicating a non-square shape, a width of which is longer than a height).

The decoder 120 may determine a second coding unit 1302, 1312, or 1322 by dividing at least one of a width and height of the first coding unit 1310 having a size of N×2N. That is, the decoder 120 may determine the second coding unit 1302 having a size of NxN or the second coding unit 1322 having a size of NxN/2 by partitioning the first coding unit 1310 in a horizontal direction, or determine the second coding unit 1312 having a size of N/2xN by partitioning the first coding unit 1310 in horizontal and vertical directions.

According to an embodiment, the decoder 120 may determine the second coding unit 1302, 1312, or 1322 by dividing at least one of a width and height of the first coding unit 1320 having a size of 2NxN. That is, the decoder 120 may determine the second coding unit 1302 having a size of N×N or the second coding unit 1312 having a size of N/2×N by partitioning the first coding unit 1320 in a vertical direction, or determine the second coding unit 1322 having a size of N×N/2 by partitioning the first coding unit 1320 in horizontal and vertical directions.

According to an embodiment, the decoder 120 may determine a third coding unit 1304, 1314, or 1324 by dividing at least one of a width and height of the second coding unit 1302 having a size of NxN. That is, the decoder 120 may determine the third coding unit 1304 having a size of N/2×N/2, the third coding unit 1314 having a size of N/2²×N/2, or the third coding unit 1324 having a size of N/2×N/2² by partitioning the second coding unit 1302 in vertical and horizontal directions.

According to an embodiment, the decoder 120 may determine the third coding unit 1304, 1314, or 1324 by dividing at least one of a width and height of the second coding unit 1312 having a size of N/2×N. That is, the decoder 120 may determine the third coding unit 1304 having a size of N/2×N/2 or the third coding unit 1324 having a size of N/2×N/2² by partitioning the second coding unit 1312 in a horizontal direction, or determine the third coding unit 1314 having a size of N/2²×N/2 by partitioning the second coding unit 1312 in vertical and horizontal directions.

According to an embodiment, the decoder 120 may determine the third coding unit (e.g., 1304, 1314, or 1324) by partitioning at least one of a width and height of the second coding unit 1322 having a size of N×N/2. That is, the decoder 120 may determine the third coding unit 1304 having a size of N/2×N/2 or the third coding unit 1314 having a size of N/2²×N/2 by partitioning the second coding unit 1322 in a vertical direction, or determine the third coding unit 1324 having a size of N/2×N/2² by partitioning the second coding unit 1322 in vertical and horizontal directions.

According to an embodiment, the decoder 120 may partition the square coding unit (e.g., 1300, 1302, or 1304) in a horizontal or vertical direction. For example, the decoder 120 may determine the first coding unit 1310 having a size of N×2N by partitioning the first coding unit 1300 having a size of 2N×2N in a vertical direction, or determine the first coding unit 1320 having a size of 2N×N by partitioning the first coding unit 1300 in a horizontal direction. According to an embodiment, when a depth is determined based on the length of the longest side of a coding unit, a depth of a coding unit determined by partitioning the first coding unit 1300 having a size of 2N×2N in a horizontal or vertical direction may be the same as the depth of the first coding unit 1300.

According to an embodiment, a width and height of the third coding unit 1314 or 1324 may be 1/2² times those of the first coding unit 1310 or 1320. When a depth of the first coding unit 1310 or 1320 is D, a depth of the second coding unit 1312 or 1322 the width and height of which are 1/2 times those of the first coding unit 1310 or 1320, may be D+1, and a depth of the third coding unit 1314 or 1324, the width and height of which are 1/2² times those of the first coding unit 1310 or 1320, may be D+2.

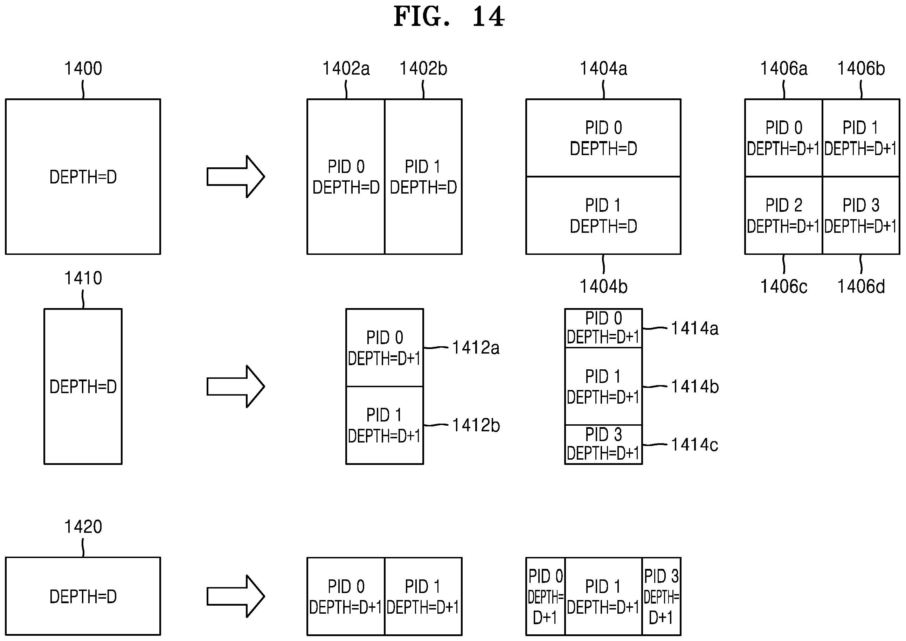

FIG. 14 shows depths of and part indices (PIDs) for identifying coding units, which are determinable based on the shapes and sizes of the coding units, according to an embodiment.

According to an embodiment, the decoder 120 may determine various-shaped second coding units by partitioning a square first coding unit 1400. Referring to FIG. 14, the decoder 120 may determine second coding units 1402a and 1402b, 1404a and 1404b, or 1406a to 1406d by partitioning the first coding unit 1400 in at least one of vertical and horizontal directions based on partition shape information. That is, the decoder 120 may determine the second coding units 1402a and 1402b, 1404a and 1404b, or 1406a to 1406d based on the partition shape information of the first coding unit 1400.

According to an embodiment, a depth of the second coding units 1402a and 1402b, 1404a and 1404b, or 1406a to 1406d, which are determined based on the partition shape information of the square first coding unit 1400, may be determined based on the length of a long side thereof. For example, since the length of a side of the square first coding unit 1400 equals the length of a long side of the non-square second coding units 1402a and 1402b, or 1404a and 1404b, the first coding unit 1400 and the non-square second coding units 1402a and 1402b, or 1404a and 1404b may have the same depth, e.g., D. However, when the decoder 120 partitions the first coding unit 1400 into the four square second coding units 1406a to 1406d based on the partition shape information, since the length of a side of the square second coding units 1406a to 1406d is 1/2 times the length of a side of the first coding unit 1400, a depth of the second coding units 1406a to 1406d may be D+1 which is deeper than the depth D of the first coding unit 1400 by 1.

According to an embodiment, the decoder 120 may determine a plurality of second coding units 1412a and 1412b, or 1414a to 1414c by partitioning a first coding unit 1410, a height of which is longer than a width, in a horizontal direction based on the partition shape information. According to an embodiment, the decoder 120 may determine a plurality of second coding units by partitioning a first coding unit 1420, a width of which is longer than a height, in a vertical direction based on the partition shape information.

According to an embodiment, a depth of the second coding units 1412a and 1412b, and 1414a to 1414c, which are determined based on the partition shape information of the non-square first coding unit 1410 or 1420, may be determined based on the length of a long side thereof. For example, since the length of a side of the square second coding units 1412a and 1412b is 1/2 times the length of a side of the first coding unit 1410 having a non-square shape, a height of which is longer than a width, a depth of the square second coding units 1412a and 1412b is D+1 which is deeper than the depth D of the non-square first coding unit 1410 by 1.

Furthermore, the decoder 120 may partition the non-square first coding unit 1410 into an odd number of second coding units 1414a to 1414c based on the partition shape information. The odd number of second coding units 1414a to 1414c may include the non-square second coding units 1414a and 1414c and the square second coding unit 1414b. In this case, since the length of a long side of the non-square second coding units 1414a and 1414c and the length of a side of the square second coding unit 1414b are 1/2 times the length of a side of the first coding unit 1410, a depth of the second coding units 1414a to 1414c may be D+1 which is deeper than the depth D of the non-square first coding unit 1410 by 1. The decoder 120 may determine depths of coding units partitioned from the first coding unit 1420 having a non-square shape, a width of which is longer than a height, by using the above-described method of determining depths of coding units partitioned from the first coding unit 1410.

According to an embodiment, the decoder 120 may determine PIDs for identifying partitioned coding units, based on a size ratio between the coding units when an odd number of partitioned coding units do not have equal sizes. Referring to FIG. 14, a coding unit 1414b of a center location among an odd number of partitioned coding units 1414a to 1414c may have a width equal to that of the other coding units 1414a and 1414c and a height which is two times that of the other coding units 1414a and 1414c. That is, in this case, the coding unit 1414b of the center location may include two of the other coding unit 1414a or 1414c. Therefore, assuming that a PID of the coding unit 1414b of the center location is 1 based on a scan order, a PID of the coding unit 1414c located next to the coding unit 1414b may be increased by 2 and thus may be 3. That is, discontinuity in PID values may be present. According to an embodiment, the decoder 120 may determine whether an odd number of partitioned coding units do not have equal sizes, based on whether discontinuity is present in PIDs for identifying the partitioned coding units.

### (Determining tri-partition by using PID)

According to an embodiment, the decoder 120 may determine whether to use a specific partitioning method, based on PID values for identifying a plurality of coding units determined by partitioning a current coding unit. Referring to FIG. 14, the decoder 120 may determine an even number of coding units 1412a and 1412b or an odd number of coding units 1414a to 1414c by partitioning the first coding unit 1410 having a rectangular shape, a height of which is longer than a width. The motion information decoding apparatus 100 may use PIDs to identify a plurality of coding units. According to an embodiment, the PID may be obtained from a sample of a predetermined location of each coding unit (e.g., a top left sample).

According to an embodiment, the motion information decoding apparatus 100 may determine a coding unit of a predetermined location among the partitioned coding units, by using the PIDs for identifying the coding units. According to an embodiment, when the partition shape information of the first coding unit 1410 having a rectangular shape, a height of which is longer than a width, indicates to partition a coding unit into three coding units, the motion information decoding apparatus 100 may partition the first coding unit 1410 into three coding units 1414a to 1414c. The motion information decoding apparatus 100 may assign a PID to each of the three coding units 414a to 1414c. The motion information decoding apparatus 100 may compare PIDs of an odd number of partitioned coding units to determine a coding unit of a center location among the coding units. The motion information decoding apparatus 100 may determine the coding unit 1414b having a PID corresponding to a middle value among the PIDs of the coding units, as the coding unit of the center location among the coding units determined by partitioning the first coding unit 1410. According to an embodiment, the motion information decoding apparatus 100 may determine PIDs for identifying partitioned coding units, based on a size ratio between the coding units when the partitioned coding units do not have equal sizes. Referring to FIG. 14, the coding unit 1414b generated by partitioning the first coding unit 1410 may have a width equal to that of the other coding units 1414a and 1414c and a height which is two times that of the other coding units 1414a and 1414c. In this case, assuming that the PID of the coding unit 1414b of the center location is 1, the PID of the coding unit 1414c located next to the coding unit 1414b may be increased by 2 and thus may be 3. When the PID is not uniformly increased as described above, the motion information decoding apparatus 100 may determine that a coding unit is partitioned into a plurality of coding units including a coding unit having a size different from that of the other coding units. According to an embodiment, when the partition shape information indicates to partition a coding unit into an odd number of coding units, the motion information decoding apparatus 100 may partition a current coding unit in such a manner that a coding unit of a predetermined location among an odd number of coding units (e.g., a coding unit of a center location) has a size different from that of the other coding units. In this case, the motion information decoding apparatus 100, may determine the coding unit of the center location, which has a different size, by using PIDs of the coding units. However, the PIDs and the size or location of the coding unit of the predetermined location are not limited to the above-described examples, and various PIDs and various locations and sizes of coding units may be used.

According to an embodiment, the decoder 120 may use a predetermined data unit where a coding unit starts to be recursively partitioned.

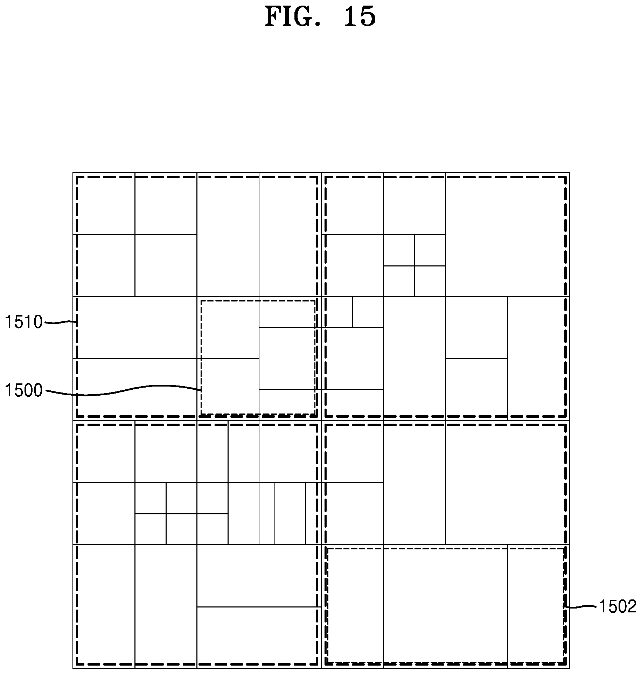

FIG. 15 shows that a plurality of coding units are determined based on a plurality of predetermined data units included in a picture, according to an embodiment.

According to an embodiment, a predetermined data unit may be defined as a data unit where a coding unit starts to be recursively partitioned using at least one of block shape information and partition shape information. That is, the predetermined data unit may correspond to a coding unit of an uppermost depth, which is used to determine a plurality of coding units partitioned from a current picture. In the following description, for convenience of explanation, the predetermined data unit is referred to as a reference data unit.

According to an embodiment, the reference data unit may have a predetermined size and shape. According to an embodiment, the reference coding unit may include M×N samples. Herein, M and N may be equal values, and may be integers expressed as multipliers of 2. That is, the reference data unit may have a square or non-square shape, and may be an integer number of coding units.

According to an embodiment, the decoder 120 of the motion information decoding apparatus 100 may partition the current picture into a plurality of reference data units. According to an embodiment, the decoder 120 may partition the plurality of reference data units, which are partitioned from the current picture, by using partitioning information of each reference data unit. The operation of partitioning the reference data unit may correspond to a partitioning operation using a quadtree structure.

According to an embodiment, the decoder 120 may previously determine the minimum size allowed for the reference data units included in the current picture. Accordingly, the decoder 120 may determine various reference data units having sizes equal to or greater than the minimum size, and determine one or more coding units by using the block shape information and the partition shape information with reference to the determined reference data unit.

Referring to FIG. 15, the motion information decoding apparatus 100 may use a square reference coding unit 1500 or a non-square reference coding unit 1502. According to an embodiment, the shape and size of reference coding units may be determined based on various data units capable of including one or more reference coding units (e.g., sequences, pictures, slices, slice segments, and largest coding units).

According to an embodiment, the bitstream obtainer of the motion information decoding apparatus 100 may obtain, from a bitstream, at least one of reference coding unit shape information and reference coding unit size information with respect to each of the various data units. An operation of partitioning the square reference coding unit 1500 into one or more coding units has been described above in relation to the operation of partitioning the current coding unit 300 of FIG. 3, and an operation of partitioning the non-square reference coding unit 1502 into one or more coding units has been described above in relation to the operation of partitioning the current coding unit 400 or 450 of FIG. 4.

According to an embodiment, the decoder 120 may use a PID for identifying the size and shape of reference coding units, to determine the size and shape of reference coding units according to some data units previously determined based on a predetermined condition. That is, the bitstream obtainer may obtain, from the bitstream, only the PID for identifying the size and shape of reference coding units with respect to each slice, slice segment, or largest coding unit which is a data unit satisfying a predetermined condition (e.g., a data unit having a size equal to or smaller than a slice) among the various data units (e.g., sequences, pictures, slices, slice segments, and largest coding units). The decoder 120 may determine the size and shape of reference data units with respect to each data unit, which satisfies the predetermined condition, by using the PID. When the reference coding unit shape information and the reference coding unit size information are obtained and used from the bitstream with respect to each data unit having a relatively small size, since efficiency of using the bitstream may not be good, only the PID may be obtained and used instead of directly obtaining the reference coding unit shape information and the reference coding unit size information. In this case, at least one of the size and shape of reference coding units corresponding to the PID for identifying the size and shape of reference coding units may be previously determined. That is, the decoder 120 may determine at least one of the size and shape of reference coding units included in a data unit serving as a unit for obtaining the PID, by selecting the previously determined at least one of the size and shape of reference coding units based on the PID.

According to an embodiment, the decoder 120 may use one or more reference coding units included in a largest coding unit. That is, a largest coding unit partitioned from a picture may include one or more reference coding units, and coding units may be determined by recursively partitioning each reference coding unit. According to an embodiment, at least one of a width and height of the largest coding unit may be integer times at least one of the width and height of the reference coding units. According to an embodiment, the size of reference coding units may be obtained by partitioning the largest coding unit n times based on a quadtree structure. That is, the decoder 120 may determine the reference coding units by partitioning the largest coding unit n times based on a quadtree structure, and partition the reference coding unit based on at least one of the block shape information and the partition shape information according to various embodiments.

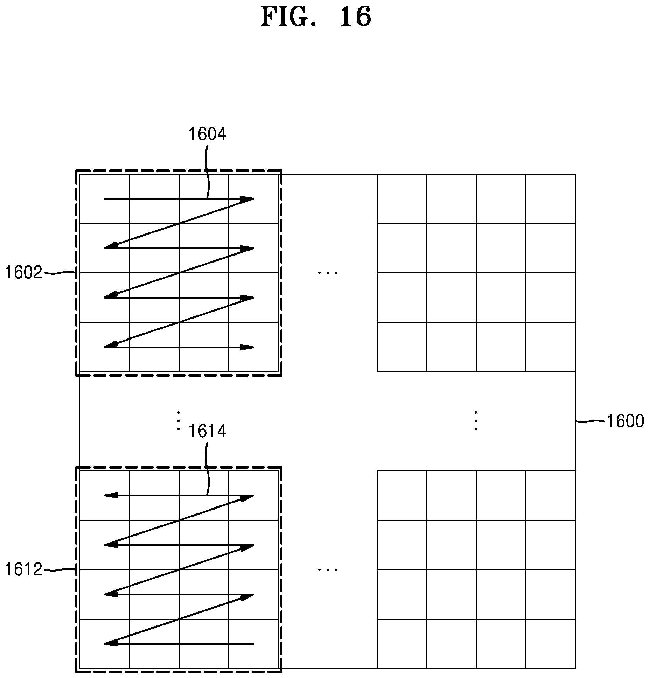

FIG. 16 illustrates a processing block serving as a unit for determining a determination order of reference coding units included in a picture 1600, according to an embodiment.

According to an embodiment, the decoder 120 may determine one or more processing blocks partitioned from a picture. The processing block is a data unit including one or more reference coding units partitioned from a picture, and the one or more reference coding units included in the processing block may be determined in a specific order. That is, a determination order of one or more reference coding units determined in each processing block may correspond to one of various types of orders for determining reference coding units, and may vary depending on the processing block. The determination order of reference coding units, which is determined with respect to each processing block, may be one of various orders, e.g., a raster scan order, a Z-scan order, an N-scan order, an up-right diagonal scan order, a horizontal scan order, and a vertical scan order, but is not limited to the above-mentioned scan orders.

According to an embodiment, the decoder 120 may obtain processing block size information and determine the size of one or more processing blocks included in the image. The decoder 120 may obtain the processing block size information from a bitstream and determine the size of one or more processing blocks included in the image. The size of processing blocks may be a predetermined size of data units, which is indicated by the processing block size information.

According to an embodiment, the bitstream obtainer of the motion information decoding apparatus 100 may obtain the processing block size information from the bitstream with respect to each specific data unit. For example, the processing block size information may be obtained from the bitstream in a data unit such as image, sequence, picture, slice, or slice segment. That is, the bitstream obtainer may obtain the processing block size information from the bitstream with respect to each of the various data units, and the decoder 120 may determine the size of one or more processing blocks, which are partitioned from the picture, by using the obtained processing block size information. The size of processing blocks may be integer times that of the reference coding units.

According to an embodiment, the decoder 120 may determine the size of processing blocks 1602 and 1612 included in the picture 1600. For example, the decoder 120 may determine the size of processing blocks based on the processing block size information obtained from the bitstream. Referring to FIG. 16, according to an embodiment, the decoder 120 may determine a width of the processing blocks 1602 and 1612 to be four times the width of the reference coding units, and determine a height of the processing blocks 1602 and 1612 to be four times the height of the reference coding units. The decoder 120 may determine a determination order of one or more reference coding units in one or more processing blocks.

According to an embodiment, the decoder 120 may determine the processing blocks 1602 and 1612, which are included in the picture 1600, based on the size of processing blocks, and the reference coding unit determiner 12 may determine a determination order of one or more reference coding units in the processing blocks 1602 and 1612. According to an embodiment, determination of reference coding units may include determination of the size of reference coding units.

According to an embodiment, the decoder 120 may obtain, from the bitstream, determination order information of one or more reference coding units included in one or more processing blocks, and determine a determination order to one or more reference coding units based on the obtained determination order information. The determination order information may be defined as an order or direction for determining the reference coding units in the processing block. That is, the determination order of reference coding units may be independently determined with respect to each processing block.

According to an embodiment, the motion information decoding apparatus 100 may obtain the determination order information of reference coding units from the bitstream with respect to each specific data unit. For example, the bitstream obtainer may obtain the determination order information of reference coding units from the bitstream with respect to each data unit such as image, sequence, picture, slice, slice segment, or processing block. Since the determination order information of reference coding units indicates an order for determining reference coding units in a processing block, the determination order information may be obtained with respect to each specific data unit including an integer number of processing blocks.

According to an embodiment, the motion information decoding apparatus 100 may determine one or more reference coding units based on the determined determination order.

According to an embodiment, the bitstream obtainer may obtain the determination order information of reference coding units from the bitstream as information related to the processing blocks 1602 and 1612, and the decoder 120 determine a determination order of one or more reference coding units included in the processing blocks 1602 and 1612 and determine one or more reference coding units, which are included in the picture 1600, based on the determination order. Referring to FIG. 16, the decoder 120 may determine determination orders 1604 and 1614 of one or more reference coding units in the processing blocks 1602 and 1612, respectively. For example, when the determination order information of reference coding units is obtained with respect to each processing block, different types of the determination order information of reference coding units may be obtained for the processing blocks 1602 and 1612. When the determination order 1604 of reference coding units in the processing block 1602 is a raster scan order, reference coding units included the processing block 1602 may be determined in a raster scan order. Unlike this, when the determination order 1614 of reference coding units in the other processing block 1612 is an inverse raster scan order, reference coding units included in the processing block 1612 may be determined in an inverse raster scan order.

According to an embodiment, the decoder 120 may decode the determined one or more reference coding units. The decoder 120 may decode the picture based on the reference coding units determined as described above. A method of decoding the reference coding units may include various image decoding methods.

According to an embodiment, the motion information decoding apparatus 100 may obtain block shape information indicating the shape of a current coding unit or partition shape information indicating a partitioning method of the current coding unit, from the bitstream, and use the obtained information. The block shape information or the partition shape information may be included in the bitstream related to various data units. For example, the motion information decoding apparatus 100 may use block shape information or partition shape information included in a sequence parameter set, a picture parameter set, a video parameter set, a slice header, or a slice segment header. Moreover, the motion information decoding apparatus 100 may obtain and use, from the bitstream, a syntax related to the block shape information or the partition shape information, for each largest coding unit, a reference coding unit, or a processing block.

According to an embodiment, the decoder 120 may determine a kind of partition type of a coding unit, to be different according to a predetermined data unit. The motion information decoding apparatus 100 may determine a combination of partition types of the coding unit to be different according to a predetermined data unit (e.g., a sequence, a picture, a slice, etc.) according to the embodiment.

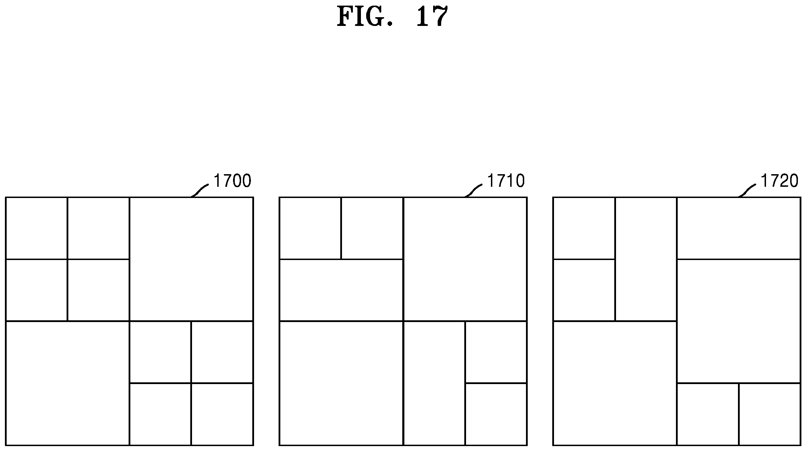

FIG. 17 is a diagram illustrating coding units that may be determined for each picture, in a case where pictures have different combinations of partition types of a coding unit from one another.

Referring to FIG. 17, the decoder 120 may determine the combination of the partition types of the coding unit to be different according to each picture. For example, the decoder 120 may decode an image by using a picture 1700 that may be partitioned as four coding units, a picture 1710 that may be partitioned as two or four coding units, and a picture 1720 that may be partitioned as two, three, or four coding units, from among one or more pictures included in the image. The decoder 120 may only use partition shape information representing partitioning into four square coding units, in order to partition the picture 1700 into a plurality of coding units. The decoder 120 may only use partition shape information representing partitioning into two or four coding units, in order to partition the picture 1710. The decoder 120 may only use partition shape information representing partitioning into two, three, or four coding units, in order to partition the picture 1720. The above-described combination of the partition types is an example for describing operations of the motion information decoding apparatus 100, and thus, the combination of the partition types is not limited to the above embodiment, and it should be interpreted that various combinations of partition types may be used with respect to a predetermined data unit.

According to an embodiment, a bitstream obtainer of the motion information decoding apparatus 100 may obtain a bitstream including an index representing the combination of the partition shape information, for every predetermined data unit (e.g., a sequence, a picture, a slice, etc.) For example, the bitstream obtainer may obtain an index representing the combination of the partition shape information from a sequence parameter set, a picture parameter set, or a slice header. The decoder 120 of the motion information decoding apparatus 100 may determine the combination of partition types of the coding unit with respect to every predetermined data unit by using the obtained index, and accordingly, the data units may use different combinations of the partition types from one another.

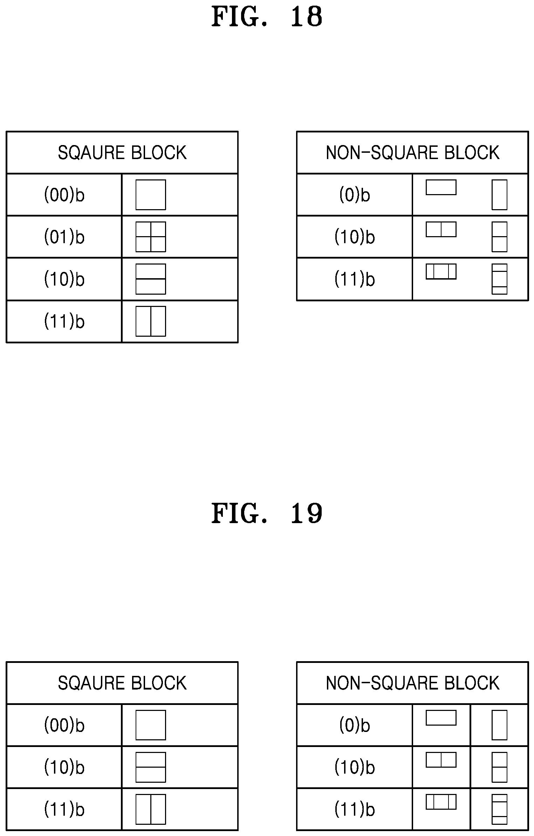

FIG. 18 is a diagram showing various types of coding unit that may be determined based on partition shape information expressed in a binary code, according to an embodiment.

According to an embodiment, the motion information decoding apparatus 100 may partition the coding unit as various types by using block shape information and partition shape information obtained by the bitstream obtainer. The partition types of the coding unit may include various types including the above-described types in the above embodiment.

Referring to FIG. 18, the decoder 120 may partition the square coding unit in one of a horizontal direction and a vertical direction based on the partition shape information, and may partition a coding unit of non-square shape in a horizontal or vertical direction.

When the decoder 120 may partition a coding unit of a square shape in a horizontal direction and a vertical direction into four coding units of square shape According to an embodiment, partition shape information about the coding unit of the square shape may indicate four kinds of partition types. According to an embodiment, the partition shape information may be expressed as a binary code of two digits, and a binary code may be allocated to each of partition types. For example, when the coding unit is not partitioned, the partition shape information may be expressed as (00)b. When the coding unit is partitioned in a horizontal direction and a vertical direction, the partition shape information may be expressed as (01)b. When the coding unit is partitioned in the horizontal direction, the partition shape information may be expressed as (10)b. When the coding unit is partitioned in the vertical direction, the partition shape information may be expressed as (11)b.

According to an embodiment, when the decoder 120 partitions a coding unit of a non-square shape in a horizontal direction or a vertical direction, kinds of partition types that the partition shape information may represent may be determined according to how many coding units are partitioned. Referring to FIG. 18, the decoder 120 may partition a coding unit of a non-square shape up to three pieces, according to an embodiment. The decoder 120 may partition the coding unit into two coding units, and in this case, the partition shape information may be expressed as (10)b. The decoder 120 may partition the coding unit into three coding units, and in this case, the partition shape information may be expressed as (11)b. The decoder 120 may determine not to partition the coding unit, and in this case, the partition shape information may be expressed as (0)b. That is, the decoder 120 may use a variable length coding (VLC), not a fixed length coding (FLC), in order to use the binary code representing the partition shape information.

Referring to FIG. 18 according to the embodiment, the binary code of the partition shape information representing that the coding unit is not partitioned may be expressed as (0)b. In a case where the binary code of the partition shape information representing that the coding unit is not partitioned is set as (00)b, the binary code of two-bits of the partition shape information has to be used even when there is no partition shape information set as (01)b. However, as shown in FIG. 18, when three kinds of partition types are used with respect to the coding unit of non-square shape, the decoder 120 may determine not to partition the coding unit even by using one-bit binary code (0)b as the partition shape information, and thus, the bitstream may be efficiently used. However, the partition type of the coding unit of the non-square shape represented by the partition shape information is not limited to the three types shown in FIG. 18, but may include various types including the above-described embodiments.

FIG. 19 is a diagram showing another type of coding unit that may be determined based on partition shape information that may be expressed in a binary code, according to an embodiment.

Referring to FIG. 19, the decoder 120 may partition the coding unit of the square shape in the horizontal or vertical direction based on the partition shape information, and may partition the coding unit of the non-square shape in the horizontal or vertical direction. That is, the partition shape information may represent the coding unit of the square shape partitioned in one direction. In this case, the binary code of the partition shape information representing that the coding unit of the square shape is not partitioned may be expressed as (0)b. In a case where the binary code of the partition shape information representing that the coding unit is not partitioned is set as (00)b, the binary code of two-bits of the partition shape information has to be used even when there is no partition shape information set as (01)b. However, as shown in FIG. 19, when three kinds of partition types are used with respect to the coding unit of the square shape, the decoder 120 may determine not to partition the coding unit even by using one-bit binary code (0)b as the partition shape information, and thus, the bitstream may be efficiently used. However, the partition type of the coding unit of the square shape represented by the partition shape information is not limited to the three types shown in FIG. 19, but may include various types including the above-described embodiments.

According to an embodiment, the block shape information or the partition shape information may be expressed by using the binary code, and such information may be directly generated as a bitstream. Also, the block shape information expressed as the binary code may not be directly generated as a bitstream, but may be used as a binary code input in a context adaptive binary arithmetic coding (CABAC).

According to an embodiment, a process in which the motion information decoding apparatus 100 obtains a syntax about the block shape information or the partition shape information through the CABAC will be described. A bitstream including a binary code about the syntax may be obtained via a bitstream obtainer. The decoder 120 may detect a syntax element representing the block shape information or the partition shape information by inverse-quantizing a bin string included in the obtained bitstream. According to an embodiment, the decoder 120 obtains a set of binary bin strings corresponding to a syntax element to be decoded, and decodes each of bins. In addition, the decoder 120 may repeatedly perform the above operation until a bin string of decoded bins is equal to or one of previously calculated bin strings. The decoder 120 may determine the syntax element by performing an inverse-binarization of the bin string.

According to an embodiment, the decoder 120 may determine the syntax of the bin string by performing a decoding operation of an adaptive binary arithmetic coding, and the decoder 120 may update a probability model of the bins obtained by the bitstream obtainer. Referring to FIG. 18, the bitstream obtainer of the motion information decoding apparatus 100 may obtain a bitstream representing the binary code indicating the partition shape information, according to the embodiment. The decoder 120 may determine a syntax about the partition shape information by using the obtained binary code having one-bit or two-bit size. The decoder 120 may update a probability with respect to each bit in the two-bit binary code, in order to determine the syntax about the partition shape information. That is, the decoder 120 may update a probability of having a value of 0 or 1 when decoding a next bin, according to the value that a first bin has, that is, 0 or 1, in the two-bit binary code.

According to an embodiment, when determining the syntax, the decoder 120 may update probabilities of the bins used in decoding the bins in the bin string about the syntax, and the decoder 120 may determine that a probability for a certain bit in the bin string is not updated and the same probability maintains.

Referring to FIG. 18, in the process of determining the syntax by using the bin string representing the partition shape information of the coding unit of the non-square shape, the decoder 120 may determine the syntax about the partition shape information by using one bin having a value of 0 when the coding unit of the non-square shape is not partitioned. That is, when the block shape information represents that the current coding unit has a non-square shape, the first bin in the bin string of the partition shape information may have a value of 0 when the coding unit of the non-square shape is not partitioned and may have a value of 1 when the coding unit of the non-square shape is partitioned into two or three coding units. Accordingly, a probability that the first bin in the bin string of the partition shape information about the coding unit of the non-square shape has a value of 0 may be 1/3, and a probability of having a value 1 may be 2/3. As described above, since the partition shape information representing that the coding unit of the non-square shape is not partitioned may be expressed only by the bin string of one bit having a value of 0, the decoder 120 may determine the syntax of the partition shape information by determining whether the second bin has a value 0 or 1 only when the first bin of the partition shape information has a value of 1. According to an embodiment, when the first bin with respect to the partition shape information has a value of 1, the decoder 120 may decode the bin under an assumption that a probability that the second bin has a value of 0 and a probability of having a value of 1 are equal to each other.

According to an embodiment, the motion information decoding apparatus 100 may use various probabilities with respect to each bin when determining the bin of the bin string about the partition shape information. According to an embodiment, the decoder 120 may determine the probability of the bin with respect to the partition shape information differently depending on the direction of a non-square block. According to an embodiment, the decoder 120 may determine the probability of the bin with respect to the partition shape information to be different according to an area or a length of a longer side of the current coding unit. According to an embodiment, the decoder 120 may determine the probability of the bin with respect to the partition shape information to be different according to at least one of a shape and a length of a longer side of the current coding unit.

According to an embodiment, the decoder 120 may determine that the probabilities of the bins with respect to the partition shape information are equal to each other, with respect to coding units of a predetermined size or greater. For example, with respect to the coding units having a size of 64-sample or greater based on a length of a longer side of the coding unit, it may be determined that the probabilities of the bins of the partition shape information are equal to one another.

According to an embodiment, the decoder 120 may determine initial probabilities of bins configuring a bin string of the partition shape information based on a slice type (e.g., an I slice, a P slice, or a B slice).

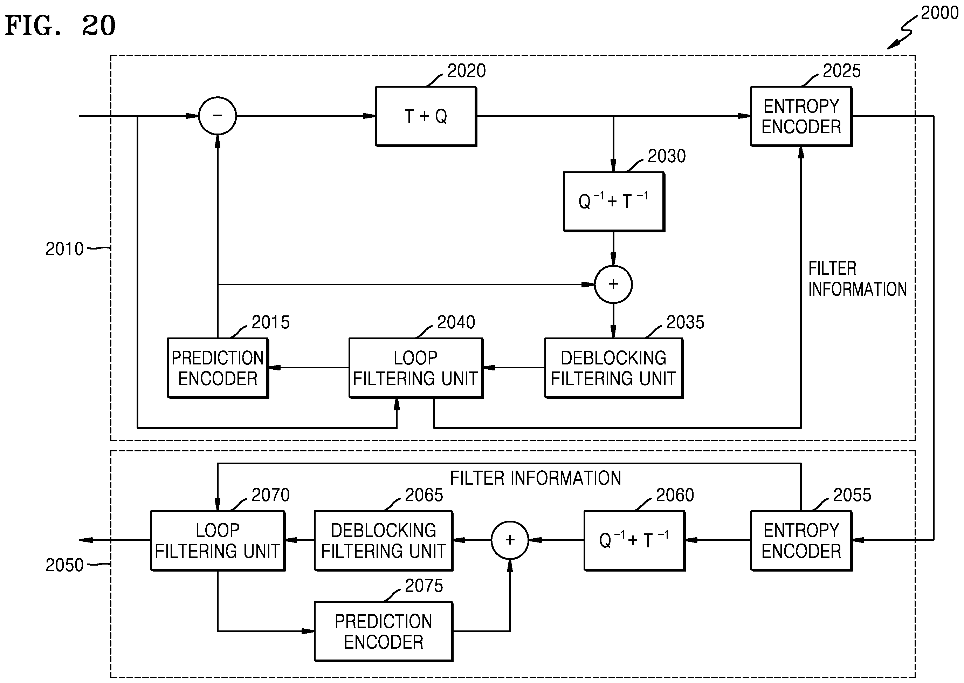

FIG. 20 is a block diagram of an image encoding and decoding system performing a loop filtering.

An encoding terminal 2010 of an image encoding and decoding system 2000 transfers to a decoding terminal an encoded bitstream of an image, and a decoding terminal 2050 receives and decodes the bitstream to output a reconstructed image. Here, the encoding terminal 2010 may be an element similar to a motion information encoding apparatus 200 that will be described later, and the decoding terminal 2050 may be an element similar to the motion information decoding apparatus 100.

In the encoding terminal 2010, a prediction encoder 2015 outputs a reference image through an inter prediction and an intra prediction, and a transformation and quantization unit 2020 quantizes residual data between the reference image and a current input image into a quantized transformation coefficient and outputs the quantized transformation coefficient. An entropy encoder 2025 encodes and transforms the quantized transformation coefficient, and outputs a bitstream. The quantized transformation coefficient is reconstructed as data of a spatial domain through an inverse-quantization and inverse-transformation unit 2030, and the reconstructed data of the spatial domain is output as a reconstructed image through a deblocking filtering unit 2035 and a loop filtering unit 2040. The reconstructed image may be used as a reference image of a next input image, after passing through a prediction encoder 2015.

In the bitstream received by the decoding terminal 2050, encoded image data is reconstructed as residual data of a spatial domain through an entropy decoder 2055 and the inverse-quantization and inverse-transformation unit 2060. The reference image and residual data output from a prediction decoder 2075 are combined to configure image data of a spatial domain, and a deblocking filtering unit 2065 and a loop filtering unit 2070 perform filtering operations on the image data of the spatial domain to output a reconstructed image of a current original image. The reconstructed image may be used as a reference image of a next original image by the prediction decoder 2075.

The loop filtering unit 2040 of the encoding terminal 2010 may perform a loop filtering by using filter information input by a user or input according to a system setting. The filter information used by the loop filtering unit 2040 is output to the entropy encoder 2010, and then is transferred to the decoding terminal 2050 with the encoded image data. The loop filtering unit 2070 of the decoding terminal 2050 may perform a loop filtering based on the filter information input to the decoding terminal 2050.

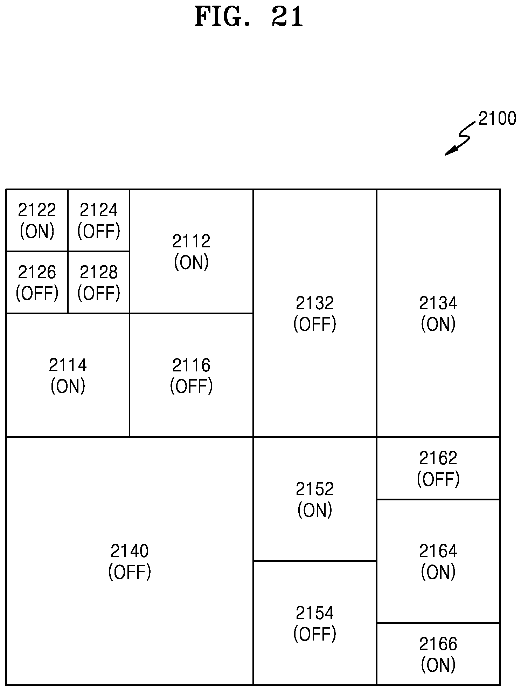

FIG. 21 is a diagram showing examples of filtering units included in a largest coding unit and filtering execution information of the filtering units, according to an embodiment.

When filtering units of the loop filtering unit 2040 of the encoding terminal 2010 and the loop filtering unit 2070 of the decoding terminal 2050 include data units that are similar to the coding units according to the embodiment illustrated with reference to FIGS. 3 to 5, the filtering information may include block shape information and partition shape information of a data unit for representing the filtering unit, and loop filtering execution information representing whether to perform the loop filtering on the filtering unit.

The filtering units included in a largest coding unit 2100 according to the embodiment may have the same block type and partition type as those of the coding units included in the largest coding unit 2100. Also, the filtering units included in the largest coding unit 2100 according to the embodiment may be partitioned, based on sizes of the coding units included in the largest coding unit 2100. Referring to FIG. 21, for example, filtering units may include a filtering unit 2140 of a square shape having a depth D, filtering units 2132 and 2134 of a non-square shape having a depth D, filtering units 2112, 2114, 2116, 2152, 2154, and 2164 of the square shape having a depth D+1, filtering units 2162 and 2166 of the square shape having a depth D1+1, and filtering units 2122, 2124, 2126, and 2128 of the square shape having a depth D+2.

Block shape information, partition shape information (depth), and loop filtering execution information of the filtering units included in the largest coding unit 2100 may be encoded as shown in Table 1 below.

**[Table 1]**

| Block ratio information | Shape of first block | Whether size of first block is to be changed, and shape of changed first block |
|---|---|---|
| 0000 | 2N×2N | 2N×2N |
| 0001 | N×N | N×N |
| 0010 | 2N×N | 2N×nU |
| 0011 | | 2N×N |
| 0100 | N×2N | nL×2N |
| 0101 | | N×2N |
| 0110 | nL×2N | N×2N |
| 0111 | | nL×2N |
| 1000 | nR×2N | N×2N |
| 1001 | | nR×2N |
| 1010 | 2N×nU | 2N×N |
| 1011 | | 2N×nU |
| 1100 | 2N×nD | 2N×N |
| 1101 | | 2N×nD |

Processes of recursively partitioning the coding unit to determine a plurality of coding units according to the block shape information and the block partition information according to the embodiment are as above descriptions with reference to FIG. 13. In the loop filtering execution information of the filtering units according to the embodiment, when a flag value is 1, it represents that the loop filtering is performed on the corresponding filtering unit, and when the flag value is 0, it represents that the loop filtering is not performed. Referring to Table 1 above, information of the data unit for determining the filtering unit that is the filtering target of the loop filtering units 2040 and 2070 may be all encoded as filtering information and transferred.

The coding units configured according to the embodiment are to minimize an error with the original image, and thus, are expected to have high spatial relation therebetween. Therefore, since the filtering units are determined based on the coding unit according to the embodiment, an operation of determining the filtering unit separately from the determination of the coding unit may be omitted. Accordingly, since the filtering unit is determined based on the coding unit according to the embodiment, information for determining a partition type of the filtering unit may be omitted, and thus, a transmission bitrate of the filtering information may be reduced.

In the above embodiment, it is described that the filtering unit is determined based on the coding unit according to the embodiment, partitioning of the filtering unit is performed based on the coding unit, and then, the filtering unit is no longer partitioned at an arbitrary depth and the type of the filtering unit at the corresponding depth may be determined.

The determination of the filtering unit described above with reference to the above embodiment may be applied to various embodiments such as deblocking filtering, adaptive loop filtering, etc., as well as the loop filtering.

The motion information decoding apparatus 100 according to the embodiment may partition the current coding unit by using at least one of the block shape information and the partition shape information, and the block shape information may be determined in advance to use only the square type and the partition shape information may be determined in advance not to partition or to represent that the coding unit may be partitioned into four square coding units. That is, according to the block shape information, the current coding unit has the square shape, and may not be partitioned or may be partitioned into four square coding units according to the partition shape information. The motion information decoding apparatus 100 may obtain a bitstream, the bitstream being generated by a predetermined encoding method determined in advance to only use the above block type and the partition type, through the bitstream obtainer, and the decoder 120 may only use the block type and the partition type determined in advance. In this case, the motion information decoding apparatus 100 may address a compatibility issue with a predetermined encoding method, by using a predetermined decoding method similar to the above-described encoding method. According to an embodiment, when the motion information decoding apparatus 100 uses the above-described predetermined decoding method that only uses predetermined block type and partition type from among various types represented by the block shape information and the partition shape information, the block shape information only represents the square shape, and thus, the motion information decoding apparatus 100 may omit a process of obtaining the block shape information from the bitstream. A syntax representing whether to use the above-described predetermined decoding method may be used, and the syntax may be obtained from a bitstream for each of data units of various shapes including a plurality of coding units, e.g., a sequence, a picture, a slice unit, a largest coding unit, etc. That is, the bitstream obtainer may determine whether to obtain the syntax representing the block shape information from the bitstream, based on a syntax representing whether to use the predetermined decoding method.

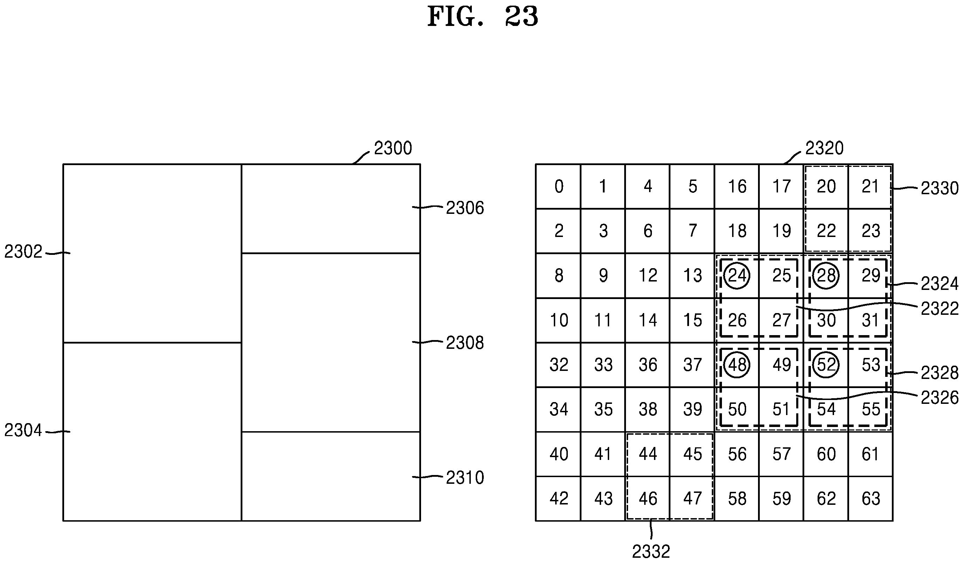

FIG. 23 is a diagram showing an index according to a Z-scan order of coding units according to an embodiment.

The motion information decoding apparatus 100 according to the embodiment may scan lower data units included in an upper data unit in a Z-scan order. Also, the motion information decoding apparatus 100 according to the embodiment may sequentially access data according to Z-scan indexes in the coding unit included in the largest coding unit or a processing block.

The motion information decoding apparatus 100 according to the embodiment may partition a reference coding unit into at least one coding unit, as described above with reference to FIGS. 3 and 4. Here, in the reference coding unit, coding units of the square shape and coding units of the non-square shape may mixedly exist. The motion information decoding apparatus 100 according to the embodiment may access data according to the Z-scan index included in each coding unit in the reference coding unit. Here, a way of applying the Z-scan index may vary depending on whether there is a non-square shape coding unit in the reference coding unit.

According to an embodiment, when the coding unit of the non-square shape does not exist in the reference coding unit, coding units of a lower depth in the reference coding unit may have successive Z-scan indexes. For example, a coding unit of an upper depth may include four coding units of a lower depth, according to the embodiment. Here, four coding units of the lower depth may have successive boundaries among them, and the coding units of the lower depth may be scanned in the Z-scan order according to the indexes representing the Z-scan order. The indexes representing the Z-scan order according to the embodiment may be set as increasing numbers according to the Z-scan order with respect to the coding units. In this case, deeper coding units of an identical depth may be scanned according to the Z-scan order.

According to an embodiment, when there is at least one coding unit of the non-square shape in the reference coding unit, the motion information decoding apparatus 100 partitions each of the coding units in the reference coding unit into sub-blocks and performs scanning operation on the partitioned sub-blocks in the Z-scan order. For example, when there is the coding unit of the non-square shape in the vertical or horizontal direction in the reference coding unit, the Z-scanning may be performed by using partitioned sub-blocks. In addition, for example, the reference coding unit is partitioned into odd-numbered coding units, the Z-scanning may be performed by using the sub-blocks. The sub-block is obtained by partitioning the coding unit that is no longer partitioned or an arbitrary coding unit, and may have a square shape. For example, the coding unit of the square shape may be partitioned into four square sub-blocks. Also, for example, the coding unit of the non-square shape may be partitioned into two square sub-blocks.

Referring to FIG. 23, for example, the motion information decoding apparatus 100 according to the embodiment may scan coding units 2302, 2304, 2306, 2308, and 2310 of lower depth in the Z-scan order in a coding unit 2300. The coding unit 2300 and the coding units 2302, 2304, 2306, 2308, and 2310 are respectively an upper coding unit and lower coding units, relative to each other. The coding unit 2300 includes the coding units 2306 and 2310 of the non-square shape in the horizontal direction. The coding units 2306 and 2310 of the non-square shape have discontinuous boundaries with adjacent coding units 2302 and 2304 of the square shape. Also, the coding unit 2308 has a square shape, and is intervened between odd-numbered coding units partitioned from the coding unit of the non-square shape. Like the coding units 2306 and 2310 of the non-square shape, the coding unit 2308 has discontinuous boundaries with adjacent coding units 2302 and 2304 of the square shape. When the non-square coding units 2306 and 2310 are included in the coding unit 2300 or the coding unit 2308 intervened among the odd-numbered coding units partitioned from the non-square coding unit is included in the coding unit 2300, adjacent boundaries between the coding units are discontinuous, and thus, successive Z-scan indexes may not be set. Therefore, the motion information decoding apparatus 100 may partition the coding units as sub-blocks and set the Z-scan indexes successively. Also, the motion information decoding apparatus 100 may perform successive Z-scanning operations on the coding units 2306 and 2310 of the non-square shape or the coding unit 2308 intervened among the odd-numbered coding units of the non-square shape.

A coding unit 2320 shown in FIG. 23 is obtained by partitioning the coding units 2302, 2304, 2306, 2308, and 2310 in the coding unit 2300 into sub-blocks. A Z-scan index may be set with respect to each of the sub-blocks, and adjacent boundaries between the sub-blocks are continuous. Thus, the sub-blocks may be scanned in the Z-scan order. For example, the coding apparatus according to the embodiment may partition the coding unit 2308 as sub-blocks 2322, 2324, 2326, and 2328. Here, the sub-blocks 2322 and 2324 may be scanned after processing data on a sub-block 2330, and the sub-blocks 2326 and 2328 may be scanned after processing data on a sub-block 2332. Also, the sub-blocks may be scanned in the Z-scan order.

In the above embodiment, the data units may be scanned according to the Z-scan order for storing data, loading data, accessing data, etc.

Also, in the above embodiment, it is described that the data units may be scanned according to the Z-scan order, but the data units may be scanned in various scan orders, e.g., a raster scan order, an N scan order, an upper and right diagonal scan order, a horizontal scan order, a vertical scan order, etc., and may not be limited to the Z-scan order.

Also, in the above embodiment, it is described that the coding units in the reference coding unit are scanned, but is not limited thereto, but it is not limited to the above example, that is, a target to be scanned may be the largest coding unit or an arbitrary block in a processing block.

Also, in the above embodiment, only when at least one of non-square block exists, the block is partitioned as sub-blocks to be scanned according to the Z-scan order. However, sub-blocks that are partitioned may be scanned according to the Z-scan order even in a case where there is no block of the non-square shape, for simplifying the implementation.

The motion information decoding apparatus 100 according to the embodiment may generate prediction data by performing an inter prediction or intra prediction on a coding unit, may generate residual data by performing an inverse-transformation on a transformation unit included in a current coding unit, and may reconstruct the current coding unit by using the prediction data and the residual data.

A prediction mode of the coding unit according to the embodiment may be at least one of an intra mode, an inter mode, and a skip mode. According to an embodiment, the prediction mode may be independently selected with respect to each coding unit.

For example, when a coding unit of 2N×2N is partitioned and becomes two 2N×N or two N×2N coding units, a prediction in the inter mode and a prediction in the intra mode may be separately performed on the coding units. In addition, the skip mode may be applied to the coding unit of 2N×N or N×2N according to the embodiment.

In addition, according to the motion information decoding apparatus 100 of the embodiment, a bi-prediction may be allowed on a coding unit of 8x4 or 4x8 in the skip mode. In the skip mode, skip mode information about the coding unit is only transferred to the motion information decoding apparatus 100, and thus, usage of residual data on the corresponding coding unit may be omitted. Therefore, overhead of the inverse-quantization and inverse-transformation may be reduced. Instead, the motion information decoding apparatus 100 according to the embodiment allows the bi-prediction on a coding unit to which the skip mode is applied, to improve a decoding efficiency. Also, the motion information decoding apparatus 100 according to the embodiment allows the bi-prediction on the coding unit of 8x4 or 4x8, but sets relatively smaller number of interpolation taps in a motion compensation process to efficiently use a memory bandwidth. As an example, instead of using an interpolation filter of 8-tap, an interpolation filter having taps less than 8 (e.g., 2-tap interpolation filter) may be used.

Also, the motion information decoding apparatus 100 according to the embodiment may partition a region included in a current coding unit in a predetermined type (e.g., an oblique-based partition), and may perform signaling of intra prediction or intra prediction information about each partition region.

The motion information decoding apparatus 100 according to the embodiment may obtain a prediction sample of a current coding unit by using peripheral samples of the current coding unit in the intra mode. Here, in the intra prediction, the prediction is performed by using peripheral samples that have been reconstructed, and the samples are referred to as reference samples.

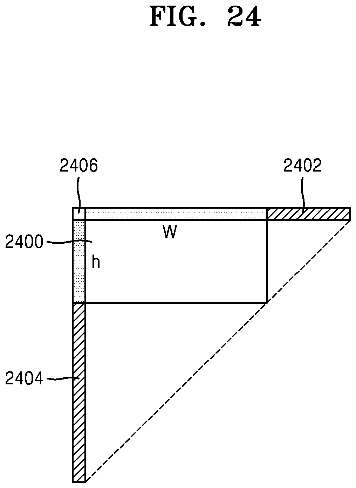

FIG. 24 is a diagram of a reference sample for intra prediction of a coding unit, according to an embodiment. Referring to FIG. 24, with respect to the current coding unit 2300 having a non-square block shape, a length w in a horizontal direction, and a length h in a vertical direction, w+h reference samples 2302 above the coding unit 2300, w+h reference samples 2304 at a left side of the coding unit 2300, and one reference sample 2306 at upper left side of the coding unit 2300, that is, total 2(w+h)+1 reference samples are necessary. To prepare the reference samples, a process of performing a padding on a portion where the reference sample does not exist is performed, and a reference sample filtering process for each prediction mode may be performed to reduce quantization error in a reconstructed reference sample.

In the above embodiment, the number of reference samples in a case where the block type of the current coding unit is non-square shape, but the number of the reference samples may be equally applied to a case where the block type of the current coding unit is a square shape.

The above-described embodiments illustrate operations related to the image decoding method performed by the motion information decoding apparatus 100. Hereinafter, operations of a motion information encoding apparatus 200 performing an image encoding method corresponding to inverse-processes of the image decoding method will be described below with reference to one or more embodiments.

FIG. 2 is a block diagram of a motion information encoding apparatus, the apparatus generating motion-related information of sub-units that are partitioned, according to an embodiment.

Referring to FIG. 2, the motion information encoding apparatus 200 may include a motion information obtainer 210 that obtains motion information about a current prediction unit by performing a motion prediction on the current prediction unit, a bitstream generator 220 that generates a spatial information spatially related to the current prediction unit and a temporal prediction candidate temporally related to the current prediction unit, partitions the current prediction unit as a plurality of sub-units, and generates information for determining motion-related information for predicting sub-units, between the spatial prediction candidate and the temporal prediction candidate, and an encoder that encodes the motion-related information for predicting the sub-units by using the obtained information.

According to an embodiment, the information for determining the motion-related information generated by the bitstream generator 220 may include spatial information and temporal information. According to an embodiment, the spatial information may indicate a direction of a spatial prediction candidate used in the sub-units, between the spatial prediction candidates located at left and upper sides of the current prediction unit. According to an embodiment, temporal information may denote a reference prediction unit of a previous picture, which is used to predict the current prediction unit.

According to an embodiment, the bitstream generator 220 may determine a candidate unit to be merged with the current prediction unit by using a motion vector prediction method in an inter mode. For example, from among the spatial prediction candidates contacting all boundaries of the current prediction unit, a plurality of spatial prediction candidates may be determined. According to an embodiment, the bitstream generator 220 may determine a spatial prediction candidate that is to be used in the sub-units, from among the determined plurality of spatial prediction candidates, by using the spatial information.

According to an embodiment, the bitstream generator 220 may search all of neighboring spatial prediction candidates contacting a left boundary of the current prediction unit and all of neighboring spatial prediction candidates contacting an upper boundary of the current prediction unit, for one spatial prediction candidate to be merged with the current prediction unit, by using the spatial information.

Also, according to the embodiment, the bitstream generator 220 may search a spatial prediction candidate group including an upper left spatial prediction candidate, an upper right spatial prediction candidate, and a lower right spatial prediction candidate contacting a corner of the current prediction unit, in addition to the left and upper spatial prediction candidates of the current prediction unit, for one spatial prediction candidate and determine to be merged with the current prediction unit, by using the spatial information.

According to an embodiment, the bitstream generator 220 may determine one spatial prediction candidate from among the left spatial prediction candidate group, the upper spatial prediction candidate group, and the corner spatial prediction candidate group in an implicit way. For example, according to the implicit way, the bitstream generator 220 may search a first spatial prediction candidate group, a second spatial prediction candidate group, or a third spatial prediction candidate group for a spatial prediction candidate having a reference index that is the same as that of the sub-unit of the current prediction unit, and may determine the spatial prediction candidate as one spatial prediction candidate to be merged.

Also, for example, the bitstream generator 220 may search the first spatial prediction candidate group, the second spatial prediction candidate group, or the third spatial prediction candidate group, for a neighboring prediction unit having a prediction mode of an inter mode, and determine the found prediction unit as one spatial prediction candidate to be merged with sub-units of the current prediction unit.

According to an embodiment, the bitstream generator 220 may determine one of the first spatial prediction candidate group as a left spatial prediction candidate, one of the second spatial prediction candidate group as an upper spatial prediction candidate, and one of the third spatial prediction candidate group as a corner spatial prediction candidate, and may determine the left, upper, and corner spatial prediction candidates as one spatial prediction candidate to be merged with the current prediction unit.

FIG. 3 is a diagram illustrating a prediction unit partitioned into one or more sub-units, according to an embodiment.

Encoding operations related to FIG. 3 may be opposite the operations of the motion information decoding apparatus 100 described above, and thus, detailed descriptions thereof are omitted.

FIG. 4 is a diagram illustrating generation of motion-related information of a spatial prediction candidate in each of the sub-units, according to an embodiment.

According to an embodiment, the bitstream generator 220 may generate the spatial prediction candidate to be merged with the current prediction unit including the sub-units, by using the spatial information in the information for determining the motion-related information of the sub-units.

Encoding operations related to FIG. 4 may be opposite the operations of the motion information decoding apparatus 100 described above, and thus, detailed descriptions thereof are omitted.

FIG. 5 illustrates determining availability of a spatial prediction candidate that is spatially related to a prediction unit, according to an embodiment.

Encoding operations related to FIG. 5 may be opposite the operations of the motion information decoding apparatus 100 described above, and thus, detailed descriptions thereof are omitted.

FIG. 6 illustrates obtaining motion-related information of a reference prediction unit in a previous picture by using temporal information, according to an embodiment.

According to an embodiment, the bitstream generator 220 may generate temporal information indicating a reference prediction unit of a previous picture, which is used to predict a current prediction unit. For example, the bitstream generator 220 may determine the reference prediction unit of the previous picture by using the temporal information. The bitstream generator 220 may partition the reference prediction unit as one or more reference sub-units, and from among the reference sub-units obtained by partitioning, a reference sub-unit corresponding to the current sub-unit used to predict the current sub-unit may be determined.

According to an embodiment, the bitstream generator 220 may generate temporal information indicating one or more reference prediction units of one or more previous pictures, which are used to predict the current prediction unit.

Encoding operations related to FIG. 6 may be opposite the operations of the motion information decoding apparatus 100 described above, and thus, detailed descriptions thereof are omitted.

FIG. 7 is a diagram illustrating obtaining motion-related information of one or more spatial prediction candidates adjacent to a sub-unit, according to an embodiment.

Encoding operations related to FIG. 7 may be opposite the operations of the motion information decoding apparatus 100 described above, and thus, detailed descriptions thereof are omitted.

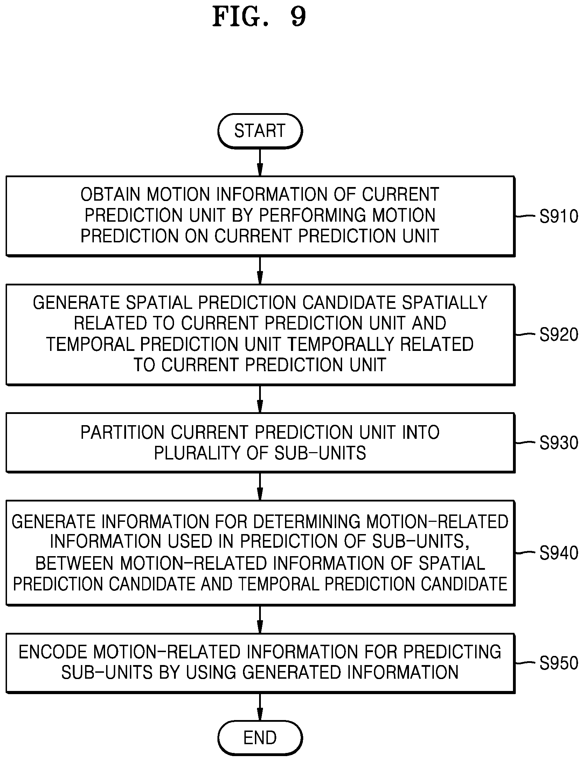

FIG. 9 is a flowchart illustrating a method of encoding motion information in order to generate motion-related information of sub-units by using information for determining the motion-related information, according to an embodiment.

In operation S910, the motion information encoding apparatus 200 may obtain motion information about a current prediction unit by performing a motion estimation on the current prediction unit.

In operation S920, the motion information encoding apparatus 200 may generate a spatial prediction candidate that is spatially related to the current prediction unit and a temporal prediction candidate that is temporally related to the current prediction unit.

In operation S930, the motion information encoding apparatus 200 may partition the current prediction unit as one or more sub-units.

In operation S940, the motion information encoding apparatus 200 may generate information for determining motion-related information of the sub-units, between motion-related information of the spatial prediction candidate and the motion-related information of the temporal prediction candidate.

In operation S950, the motion information encoding apparatus 200 may encode the motion-related information for predicting the sub-units by using generated information.

FIG. 10 illustrates that, when a second coding unit of a non-square shape determined by partitioning a first coding unit 1000 satisfies a predetermined condition, the motion information encoding apparatus 200 restricting a partition type of the second coding unit.

According to an embodiment, an encoder 230 may determine to partition the first coding unit 1000 of a square shape as second coding units 1010a, 1010b, 1020a, and 1020b of non-square shape. The second coding units 1010a, 1010b, 1020a, and 1020b may be independently partitioned from one another. Accordingly, the encoder 230 may determine to partition each of the second coding units 1010a, 1010b, 1020a, and 1020b as a plurality of coding units, or not to partition each of the second coding units 1010a, 1010b, 1020a, and 1020b. The operations of the motion information encoding apparatus 200 for restricting the partition type when the second coding unit of the non-square shape satisfies a predetermined condition regarding FIG. 10 may be opposite the operations of the motion information decoding apparatus 100 described above with reference to FIG. 10, and thus, detailed descriptions thereof are omitted.

FIG. 11 illustrates that, when the partition shape information may not represent partitioning as four square coding units, the motion information encoding apparatus 200 partitions the coding unit of the square shape. The operations of the motion information encoding apparatus 200 may be opposite the operations of the motion information decoding apparatus 100 described above with reference to FIG. 11, and thus, detailed descriptions thereof are omitted.

FIG. 12 shows processing order of a plurality of coding units varying depending on a partition process of the coding unit, according to an embodiment.

The encoder 230 according to an embodiment may partition a first coding unit 1200 of a square shape in at least one of a horizontal direction and a vertical direction. The bitstream generator 220 according to the embodiment may generate a bitstream including block shape information representing that the first coding unit 1200 has a square shape and partition shape information representing that the first coding unit 1200 is partitioned in at least one direction of the horizontal direction and the vertical direction.

According to an embodiment, the encoder 230 may partition the first coding unit 1200 to determine second coding units (for example, 1210a, 1210b, 1220a, 1220b, 1230a, 1230b, 1230c, 1230d, etc.) Referring to FIG. 12, the second coding units 1210a, 1210b, 1220a, and 1220b of non-square shape, which are determined by partitioning the first coding unit 1200 only in the horizontal direction or the vertical direction, may be independently partitioned. For example, the encoder 230 may respectively partition the second coding units 1210a and 1210b, which generated by partitioning the first coding unit 1200 in the vertical direction, in the horizontal direction to determine third coding units 1216a, 1216b, 1216c, and 1216d, and may respectively partition the second coding units 1220a and 1220b, which are generated by partitioning the first coding unit 1200 in the horizontal direction, in the horizontal direction to determine third coding units 1226a, 1226b, 1226c, and 1226d. The operations of the motion information encoding apparatus 200 regarding FIG. 10 may be opposite the operations of the motion information decoding apparatus 100 described above with reference to FIG. 10, and thus, detailed descriptions thereof are omitted.

FIG. 13 illustrates, when a coding unit is recursively partitioned to determine a plurality of coding units, processes of determining a depth of a coding unit according to variation in a shape and a size of the coding unit. The process for the encoder 230 of the motion information encoding apparatus 200 to determine a depth may be opposite the process for the decoder 120 of the motion information decoding apparatus 100 to determine a depth of the coding unit described above with reference to FIG. 13, and thus, detailed descriptions thereof are omitted.

According to an embodiment, the motion information encoding apparatus 200 may determine whether a plurality of coding units partitioned from the current coding unit are partitioned in a certain partition type, based on values of indexes for classifying the plurality of coding units. Referring to FIG. 14, the motion information encoding apparatus 200 may partition a first coding unit 1410 of a rectangular shape, a height of which is greater than a width, to determine even-numbered coding units 1412a and 1412b or odd-numbered coding units 1414a, 1414b, and 1414c. The motion information encoding apparatus 200 may use an index (PID) indicating each coding unit, in order to distinguish each of the plurality of coding units from the others. According to an embodiment, the PID may be obtained from a sample at a predetermined location (e.g., an upper left sample) in each of the coding units. The operations of the motion information encoding apparatus 200 regarding FIG. 14 may be opposite the operations of the motion information decoding apparatus 100 described above with reference to FIG. 14, and thus, detailed descriptions thereof are omitted.

FIG. 15 shows that a plurality of coding units are determined according to a plurality of predetermined data units included in a picture, according to an embodiment. According to an embodiment, the encoder 230 may use the reference coding unit as a predetermined data unit, from which a recursive partition of the coding unit starts. Regarding FIG. 15, the operations of the motion information encoding apparatus 200 using the reference coding unit may be opposite the operations of the motion information decoding apparatus 100 using the reference coding unit described above with reference to FIG. 15, and thus, detailed descriptions thereof are omitted.

According to an embodiment, the bitstream generator 220 of the motion information encoding apparatus 200 may generate a bitstream including at least one of information about a shape of the reference coding unit and information about a size of the reference coding unit, with respect to each of the various data units. The process of determining at least one coding unit included in a reference coding unit 1500 of a square shape is described above via the description of the process of partitioning the current coding unit 300 with reference to FIG. 3, and the process of determining at least one coding unit included in the reference coding unit 1500 of a non-square shape is described above via the description of the process of partitioning the current coding unit 400 or 450 with reference to FIG. 4. Thus, detailed descriptions thereof are omitted.

According to an embodiment, the encoder 230 may use an index for identifying a size and a shape of the reference coding unit in order to determine the size and the shape of the reference coding unit according to some of data units determined in advance based on a predetermined condition. That is, the bitstream generator 220 may generate a bitstream including the index for identifying the size and the shape of the reference coding unit, for each of data units satisfying a predetermined condition (for example, a data unit having a size equal to or less than the slice) from among the various data units (for example, a sequence, a picture, a slice, a slice segment, a largest coding unit, etc.) The encoder 230 may determine the size and the shape of the reference data unit for each data unit that satisfies the predetermined condition, by using the index. According to an embodiment, at least one of the size and the shape of the reference coding unit related to the index indicating the size and the shape of the reference coding unit may be determined in advance. That is, the encoder 230 may select predetermined at least one of the size and the shape of the reference coding unit, and then, may determine at least one of the size and the shape of the reference coding unit included in the data unit that is a reference of obtaining the index. The operation of the encoder 230 using the index for identifying the size and the shape of the reference coding unit may be similar to the operation of the decoder 120 described above, and thus, detailed descriptions thereof are omitted.

FIG. 16 is a diagram of a processing block that is a reference of determining a determination order of the reference coding unit included in a picture 1600, according to an embodiment.

According to an embodiment, the encoder 230 may determine a size of at least one processing block included in an image, by obtaining information about the size of the processing block. The encoder 230 may determine the size of at least one processing block included in the image, and the bitstream generator 220 may generate a bitstream including information about the size of the processing block. The size of the processing block may be a predetermined size of a data unit indicated by the information about the size of the processing block.

According to an embodiment, the bitstream generator 220 of the motion information encoding apparatus 200 may generate a bitstream including information about the size of the processing block, with respect to each of certain data units. For example, the bitstream including the information about the size of the processing block may be generated with respect to each of data units such as an image, a sequence, a picture, a slice, a slice segment, etc. That is, the bitstream generator 220 may generate a bitstream including information about the size of the processing block for each of the various data units, the encoder 230 may determine the size of the processing block partitioned from the picture by using the information about the size of the processing block, and the size of the processing block may be integer-times greater than the reference coding unit.

According to an embodiment, the encoder 230 may determine sizes of processing blocks 1602 and 1612 included in a picture 1600. For example, the encoder 230 may determine the size of the processing block based on the information about the size of the processing block. Referring to FIG. 16, the encoder 230 may determine a width of the processing blocks 1602 and 1612 to be 4 times greater than a width of the reference coding unit, and a height of the processing blocks 1602 and 1612 to be 4 times greater than a eight of the reference coding unit. The encoder 230 may determine an order of determining at least one reference coding unit in at least one processing block. Operations of the encoder 230 related to the processing block may be similar to those of the decoder 120 described above with reference to FIG. 16, and thus, descriptions thereof are omitted.

According to an embodiment, the bitstream generator 220 of the motion information encoding apparatus 200 may generate a bitstream including block shape information indicating the shape of the current coding unit or partition shape information representing a method of partitioning the current coding unit. The block shape information or the partition shape information may be included in a bitstream related to various data units. For example, the bitstream generator 220 of the motion information encoding apparatus 200 may use block shape information or partition shape information included in a sequence parameter set, a picture parameter set, a video parameter set, a slice header, or a slice segment header. Moreover, the bitstream generator 220 of the motion information encoding apparatus 200 may generate a bitstream including a syntax representing the block shape information or the partition shape information for each of the largest coding unit, the reference coding unit, and the processing block.

According to an embodiment, the encoder 230 may determine a kind of partition type of a coding unit, to be different according to a predetermined data unit. The encoder 230 of the motion information encoding apparatus 200 may determine a combination of partition types of the coding unit to be different according to a predetermined data unit (e.g., a sequence, a picture, a slice, etc.) according to the embodiment.

FIG. 17 is a diagram of coding units that may be determined for each picture, in a case where pictures have different combinations of partition types of a coding unit from one another.

Referring to FIG. 17, the encoder 230 may determine the combination of the partition types of the coding unit to be different according to each picture. For example, the encoder 230 may encode an image by using a picture 1700 that may be partitioned as four coding units, a picture 1710 that may be partitioned as two or four coding units, and a picture 1720 that may be partitioned as two, three, or four coding units, from among one or more pictures included in the image. The encoder 230 may partition the picture 1700 as four square coding units. The encoder 230 may partition the picture 1710 as two or four coding units. The encoder 230 may partition the picture 1720 as two, three, or four coding units. The above-described combination of the partition types is an example for describing operations of the motion information encoding apparatus 200, and thus, the combination of the partition types is not limited to the above embodiment, and it should be interpreted that various combinations of partition types may be used with respect to a predetermined data unit.

According to an embodiment, the encoder 230 of the motion information encoding apparatus 200 may determine a combination of the partition type, by which the coding unit may be partitioned, for each predetermined data unit by using an index indicating the combination of the partition shape information, and accordingly, each predetermined data unit may use different combination of the partition type from the others. Moreover, the bitstream generator 220 of the motion information encoding apparatus 200 may generate a bitstream including an index indicating the combination of the partition shape information for each predetermined data unit (e.g., a sequence, a picture, a slice, etc.)

FIGS. 18 and 19 show various types of coding unit that may be determined based on partition shape information expressed in a binary code, according to an embodiment.

According to an embodiment, the encoder 230 of the motion information encoding apparatus 200 may partition the coding unit in various types, and may generate a bitstream including the block shape information and the partition shape information via the bitstream generator 220. The partition types of the coding unit may include various types including the above-described types in the above embodiment. Referring to FIG. 18, the encoder 230 may partition the square coding unit in one of a horizontal direction and a vertical direction based on the partition shape information, and may partition a coding unit of non-square shape in a horizontal or vertical direction. Characteristics of the binary code of the partition shape information that may be used by the motion information encoding apparatus 200 may correspond to those of the motion information decoding apparatus 100 described above with reference to FIGS. 18 and 19, and thus, detailed descriptions thereof are omitted.

The motion information encoding apparatus 200 according to the embodiment may generate prediction data by performing an inter prediction or intra prediction on a coding unit, may generate residual data by performing an inverse-transformation on a transformation unit included in a current coding unit, and may encode the current coding unit by using the prediction data and the residual data.

A prediction mode of the coding unit according to the embodiment may be at least one of an intra mode, an inter mode, and a skip mode. According to an embodiment, the prediction may be independently performed on each coding unit, so that a prediction mode having a minimum error may be selected.

For example, when a coding unit of 2Nx2N is partitioned and becomes two 2NxN or two Nx2N coding units, a prediction in the inter mode and a prediction in the intra mode may be separately performed on the coding units. Also, according to the embodiment, the encoder 230 of the motion information encoding apparatus 200 may encode the coding unit by using a skip mode in a case where the coding unit has a non-square shape, as well as a square shape. Since the image may be decoded in the skip mode even in a case of the coding unit of non-square shape, as well as the coding unit of the square shape determined at least one of the block shape information and the partition shape information, the skip mode that is relatively more adaptive may be used and encoding/decoding efficiency of the image may be improved. The characteristic of the motion information encoding apparatus 200 using the skip mode in the coding unit of the non-square shape may be similar to that of the motion information encoding apparatus 200 using the skip mode described above, and thus, detailed descriptions thereof are omitted.

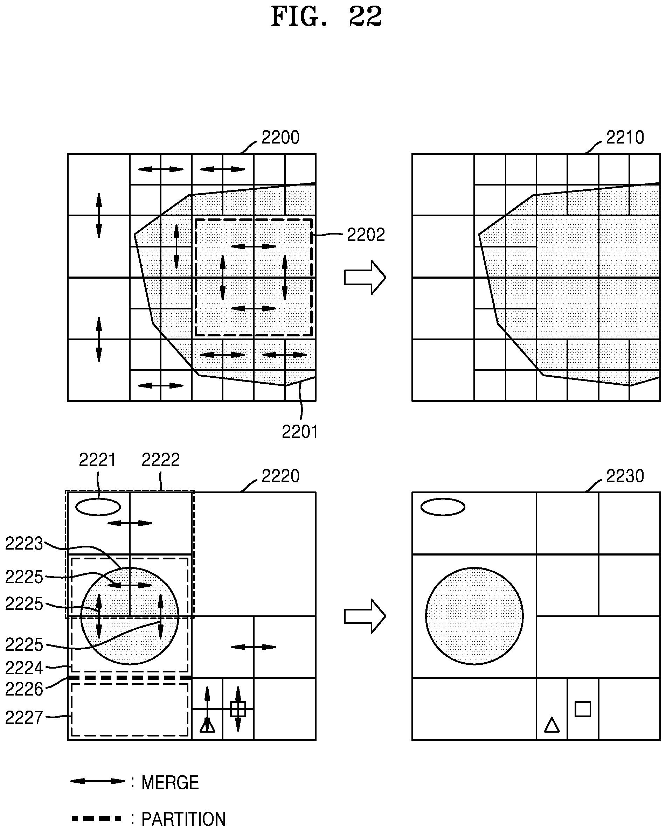

FIG. 22 is a diagram illustrating a process of performing merging or partitioning between coding units determined according to a predetermined encoding method, according to an embodiment.

According to an embodiment, the motion information encoding apparatus 200 may determine coding units for partitioning the picture by using the above-described predetermined encoding method. For example, the motion information encoding apparatus 200 may determine a coding unit of a current depth or may partition a coding unit as four coding units of a lower depth, based on partition information of the coding unit. As described above, the motion information encoding apparatus 200 may determine the coding unit by using the block shape information representing that the current coding unit always has the square shape, and the partition shape information representing that the current coding unit may not be partitioned or may be partitioned as four square coding units. Referring to FIG. 22, pictures 2200 and 2220 may be partitioned according to the square coding unit determined by the above-described encoding method.

However, according to the above-described predetermined encoding method, whether the current coding unit may be partitioned is determined according to whether the current coding unit is suitable for expressing a relatively small object included in the current coding unit, and thus, it may be impossible to encode a larger object and a smaller object in the picture via one coding unit. Here, an object may be a set of samples included in the picture, and may denote a region of samples having similar sample values to one another, which may be distinguished from the other regions. Referring to FIG. 22, the motion information encoding apparatus 200 may partition a first coding unit 2222 as four coding units of a lower depth in order to reconstruct a smaller object 2221, and may determine a coding unit for decoding the smaller object 2221. However, since a larger object 2223 is not included in the current coding unit 2222, the larger object 2223 is not suitable to be decoded by using the current coding unit 2222. Further, since the current coding unit 2222 is partitioned to decode the smaller object 2221, a partitioning process of the coding unit that is unnecessary for decoding the larger object 2223 has to be performed and the process is not efficient. That is, when the motion information encoding apparatus 200 may use one coding unit in order to encode a part of the larger object 2223, an image encoding may be effectively performed.

The encoder 230 of the motion information encoding apparatus 200 according to the embodiment may partition the current coding unit by using at least one of the block shape information and the partition shape information, and the block shape information may be determined in advance to use only the square type and the partition shape information may be determined in advance not to partition or to represent that the coding unit may be partitioned into four square coding units. This may correspond to the process of determining the coding unit used in the predetermined encoding method described above with reference to one or more embodiments. In this case, the encoder 230 may use the sample values included in the picture, in order to merge the coding units with one another or to partition the coding unit determined by using the predetermined encoding method. For example, the encoder 230 may detect various objects included in the picture by checking parts having similar sample values to each other, and may perform the merging/partitioning process of the coding units based on the parts including the detected objects.

Referring to FIG. 22, the encoder 230 may determine a plurality of coding units for partitioning the picture 2200, by using the above-described encoding method. However, even there is a part 2201 having similar sample value in the picture, a process of partitioning the similar region as a plurality of coding units, not one coding unit, may be performed. In this case, even when the coding unit is determined by the predetermined encoding method, the encoder 230 may merge the coding units into one coding unit 2202 for perform the encoding as one coding unit. Referring to FIG. 22, as another embodiment, the encoder 230 may partition the coding unit 2222 for encoding the smaller object 2221 into four coding units, by using the above-described predetermined encoding method. Since the coding units partitioned as above may not include the detected larger object 2223, the encoder 230 may merge the coding units as one coding unit including the parts having similar sample values to each other (2225).

According to an embodiment, the encoder 230 may determine the coding unit by using the predetermined encoding method that may not partition the coding unit or may partition the coding unit into four coding units by using partition information of the coding unit, and then, may re-partition the coding unit taking into account the sample values of the samples included in the picture. That is, the coding unit 230 may partition the coding unit that has been already determined, as well as merge of the coding units, for determining the coding unit for each object. Referring to FIG. 22, the encoder 230 may merge the coding units for the object 2223, or may re-partition the coding unit that is merged for the object 2223 (2226) in order to determine the coding unit optimized for the object 2223. That is, the encoder 230 may determine a part that does not include the object 2223 as a separate coding unit from the object 2223, through the partitioning process (2226).

When the bitstream of the image is generated after performing the merge or partitioning of the coding units that are determined according to the predetermined encoding method by the operations of the motion information encoding apparatus 200, the motion information decoding apparatus 100 may decode the image by performing the image decoding method that is opposite order of the image encoding method, after obtaining the bitstream.

FIG. 23 is a diagram showing an index according to a Z-scan order of coding units according to an embodiment.

The encoder 230 of the motion information encoding apparatus 200 according to the embodiment may scan lower data units included in an upper data unit in a Z-scan order. Also, the motion information encoding apparatus 200 according to the embodiment may sequentially access data according to Z-scan indexes in the coding unit included in the largest coding unit or a processing block. The encoder 230 of the motion information encoding apparatus 200 according to the embodiment may partition a reference coding unit into at least one coding unit, as described above with reference to FIGS. 3 and 4. Here, in the reference coding unit, coding units of the square shape and coding units of the non-square shape may exist. Characteristics of the index according to the order of scanning the coding units in the Z-scan order by the motion information encoding apparatus 200 may be similar to those of the motion information decoding apparatus 100 described above with reference to FIG. 23, and detailed descriptions thereof are omitted.

One or more embodiments are described as above. While the present disclosure has been particularly shown and described with reference to preferred embodiments thereof, it will be understood by those skilled in the art that various changes in form and details may be made therein without departing from the spirit and scope of the disclosure as defined by the appended claims. The preferred embodiments should be considered in descriptive sense only and not for purposes of limitation. Therefore, the scope of the present disclosure is defined not by the detailed description of the disclosure but by the appended claims, and all differences within the scope will be construed as being included in the present disclosure.

The exemplary embodiments can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), etc.

## Claims

1. A method of decoding motion information, the method comprising:
determining a current prediction unit;
obtaining a spatial prediction candidate spatially related to the current prediction unit and a temporal prediction candidate temporally related to the current prediction unit;
partitioning the current prediction unit into one or more sub-units;
obtaining, from a bitstream, information for determining motion-related information of a current sub-unit, the information being from among motion-related information of the spatial prediction candidate and motion-related information of the temporal prediction candidate; and
obtaining motion-related information of the current sub-unit by using the information for determining the motion-related information,
wherein the information for determining the motion-related information comprises spatial information and temporal information,
the spatial information indicates a direction of a spatial prediction candidate used in the one or more sub-units, from among spatial prediction candidates adjacent to the current prediction unit, and
the temporal information indicates a reference prediction unit of a previous picture used for estimating the current prediction unit.

2. The method of claim 1, wherein the obtaining of the spatial prediction candidate and the temporal prediction candidate comprises:
determining the reference prediction unit of the previous picture by using the temporal information;
partitioning the reference prediction unit into one or more reference sub-units;
determining a reference sub-unit, from among the one or more reference sub-units, used in prediction of the current sub-unit that is one of the one or more sub-units; and
obtaining motion-related information of the reference sub-unit for predicting the current sub-unit,
wherein the motion-related information for predicting the current sub-unit comprises motion-related information of the reference sub-unit.

3. The method of claim 1, further comprising determining availability of motion-related information about at least one of the spatial prediction candidates, wherein the determining of the availability comprises:
searching upper spatial prediction candidates located above the current prediction unit in a predetermined scan order, and selecting an initial upper spatial prediction candidate having available motion-related information and upper spatial prediction candidates located at a right side of the initial upper spatial prediction candidate as available upper spatial prediction candidates of the current prediction unit; and
searching left spatial prediction candidates located at a left side of the current prediction unit in a predetermined scan order, and selecting an initial left spatial prediction candidate having available motion-related information and left spatial prediction candidates located under the initial left spatial prediction candidate as available left spatial prediction candidates of the current prediction unit.

4. The method of claim 3, further comprising:
when the information for determining the motion-related information indicates to use a spatial prediction candidate located above the current prediction unit, determining whether there is an available spatial prediction candidate above the sub-unit; and
when there is no available spatial prediction candidate above the sub-unit, obtaining motion-related information of a left spatial prediction candidate of the current prediction unit as motion-related information of the sub-unit.

5. The method of claim 3, further comprising:
when the information for determining the motion-related information indicates to use a spatial prediction candidate located at a left side of the current prediction unit, determining whether there is an available spatial prediction candidate at a left side of the sub-unit; and
when there is no available spatial prediction candidate at the left side of the sub-unit, obtaining motion-related information of an upper spatial prediction candidate of the current prediction unit as motion-related information of the sub-unit.

6. The method of claim 1, further comprising,
when the information for determining the motion-related information indicates to use at least one of spatial prediction candidates adjacent to the current sub-unit,
applying a predetermined weight to motion-related information of one or more of the spatial prediction candidates adjacent to the current sub-unit and obtaining an average value,
wherein the obtaining of the motion-related information of the current sub-unit corresponds to the obtaining of the average value.

7. The method of claim 1, further comprising obtaining sub-block size information indicating a size of a sub-block within a size range of the current prediction unit, and
the partitioning of the current prediction unit into the sub-units is performed by using the sub-block size information.

8. The method of claim 1, further comprising performing motion compensation on the current sub-unit by using obtained motion-related information.

9. An apparatus for decoding motion information, the apparatus comprising:
a prediction unit determiner configured to determine a current prediction unit; and
a decoder configured to obtain a spatial prediction candidate spatially related to the current prediction unit and a temporal prediction candidate temporally related to the current prediction unit, to partition the current prediction unit into one or more sub-units, to obtain, from a bitstream, information for determining motion-related information of a current sub-unit, the information being from among motion-related information of the spatial prediction candidate and motion-related information of the temporal prediction candidate, and to obtain the motion-related information of the current sub-unit by using the information for determining the motion-related information,
wherein the information for determining the motion-related information comprises spatial information and temporal information,
the spatial information indicates a direction of a spatial prediction candidate used in the one or more sub-units, from among spatial prediction candidates adjacent to the current prediction unit, and
the temporal information indicates a reference prediction unit of a previous picture used for estimating the current prediction unit.

10. The apparatus of claim 9, wherein the decoder is configured to determine a reference prediction unit of the previous picture by using the temporal information, to partition the reference prediction unit into one or more reference sub-units, to determine a reference sub-unit, included in the one or more reference sub-units, used in prediction of a current sub-unit that is one of the one or more sub-units, and to obtain motion-related information of the reference sub-unit for predicting the current sub-unit, and
wherein the motion-related information for predicting the current sub-unit comprises motion-related information of the reference sub-unit.

11. The apparatus of claim 9, wherein the decoder is configured to determine availability of motion-related information about at least one of the spatial prediction candidate and the temporal prediction candidate, and the determining of the availability includes:
searching upper spatial prediction candidates located above the current prediction unit in a predetermined scan order, and selecting an initial upper spatial prediction candidate having available motion-related information and upper spatial prediction candidates located at a right side of the initial upper spatial prediction candidate as available upper spatial prediction candidates of the current prediction unit, and
searching left spatial prediction candidates located at a left side of the current prediction unit in a predetermined scan order, and selecting an initial left spatial prediction candidate having available motion-related information and left spatial prediction candidates located under the initial left spatial prediction candidate as available left spatial prediction candidates of the current prediction unit.

12. The apparatus of claim 11, wherein,
when the information for determining the motion-related information indicates to use a spatial prediction candidate located above the current prediction unit, the decoder is configured to determine whether there is an available spatial prediction candidate above the current sub-unit, and
when there is no available spatial prediction candidate above the current sub-unit, the decoder is configured to obtain motion-related information of a left spatial prediction candidate of the current prediction unit as motion-related information of the current sub-unit.

13. The apparatus of claim 11, wherein,
when the information for determining the motion-related information indicates to use a spatial prediction candidate located at a left side of the current prediction unit, the decoder is configured to determine whether there is an available spatial prediction candidate at a left side of the current sub-unit, and
when there is no available spatial prediction candidate at the left side of the sub-unit, the decoder is configured to obtain motion-related information of an upper spatial prediction candidate of the current prediction unit as motion-related information of the current sub-unit.

14. A method of encoding motion information, the method comprising:
obtaining motion information about a current prediction unit by performing motion prediction on the current prediction unit;
generating a spatial prediction candidate spatially related to the current prediction unit and a temporal prediction candidate temporally related to the current prediction unit;
partitioning the current prediction unit into one or more sub-units;
generating information for determining motion-related information of a current sub-unit, the information being from among motion-related information of the spatial prediction candidate and motion-related information of the temporal prediction candidate; and
encoding motion-related information for predicting the current sub-unit by using generated information,
wherein the information for determining the motion-related information comprises spatial information and temporal information,
wherein the spatial information indicates a direction of a spatial prediction candidate used in the one or more sub-units, from among spatial prediction candidates adjacent to the current prediction unit,
and the temporal information indicates a reference prediction unit of a previous picture used for estimating the current prediction unit.

15. An apparatus for encoding motion information, the apparatus comprising:
a motion information obtainer configured to obtain motion information about a current prediction unit by performing motion prediction on the current prediction unit;
a bitstream generator configured to generate a spatial prediction candidate spatially related to the current prediction unit and a temporal prediction candidate temporally related to the current prediction unit, to partition the current prediction unit into one or more sub-units, and to generate information for determining motion-related information of a current sub-unit, the information being from among motion-related information of the spatial prediction candidate and motion-related information of the temporal prediction candidate; and
an encoder configured to encode motion-related information for predicting the current sub-unit by using generated information,
wherein the information for determining the motion-related information comprises spatial information and temporal information,
wherein the spatial information indicates a direction of a spatial prediction candidate used in the one or more sub-units, from among spatial prediction candidates adjacent to the current prediction unit,
and the temporal information indicates a reference prediction unit of a previous picture used for estimating the current prediction unit.
